# EUROPEAN PATENT SPECIFICATION

(11) **EP 2 729 023 B1**
(45) Date of publication and mention of the grant of the patent: **09.09.2015**
(21) Application number: 12735000.7
(22) Date of filing: 04.07.2012
(51) Int. Cl.: A23L 3/3508, A23L 3/3445, A23L 3/3418, A23L 3/34, A23L 1/272, A23B 4/20, A23B 4/16, A23B 4/12

(54) **MEAT TREATMENT AND PRESERVATION METHOD**
FLEISCHBEHANDLUNGS- UND KONSERVIERUNGSVERFAHREN
PROCÉDÉ DE TRAITEMENT ET DE PRÉSERVATION DE VIANDE

(30) Priority: 04.07.2011 GB 201111390
(43) Date of publication of application: 14.05.2014
(73) Proprietor: Red Meat AS, 1369 Stabekk (NO)
(72) Inventor: SLINDE, Erik, N-5098 Bergen (NO); EGELANDSDAL, Bjørg, N-1369-Stabekk (NO)
(74) Representative: Golding, Louise Ann
(86) International application number: PCT/GB2012/051564
(87) International publication number: WO 2013/005035

(56) References cited:
- JP-A- 63 000 276
- US-A- 2 002 146
- DATABASE WPI Week 198011 Thomson Scientific, London, GB; AN 1980-19325C XP002684067, & JP 55 015715 A (AJINOMOTO KK) 4 February 1980 (1980-02-04)
- LUND ET AL: "The combined effect of antioxidants and modified atmosphere packaging on protein and lipid oxidation in beef patties during chill storage", MEAT SCIENCE, ELSEVIER SCIENCE, GB, vol. 76, no. 2, 23 February 2007 (2007-02-23), pages 226-233, XP005903335, ISSN: 0309-1740, DOI: 10.1016/J.MEATSCI.2006.11.003
- MOHAN A ET AL: "Effects of malate, lactate, and pyruvate on myoglobin redox stability in homogenates of three bovine muscles", MEAT SCIENCE, ELSEVIER SCIENCE, GB, vol. 86, no. 2, 1 October 2010 (2010-10-01), pages 304-310, XP027153704, ISSN: 0309-1740 [retrieved on 2010-07-17]

## Description

This invention relates to improvements in and relating to methods of treating uncooked meat and foods which contain uncooked meat. In particular, it relates to methods for preserving the colour stability of uncooked meat.

Consumers of food products, especially raw foods, are naturally influenced by the visual appearance of the food as presented in the retail outlet. This is particularly true in the case of packaged foods, where textural and olfactory cues are often not available. In the case of uncooked (e.g. raw) meat, the colour of the meat is a key factor influencing the purchasing decision of the consumer; a purplish-red or bright red meat colour is generally associated with freshness. For non-packaged meat, particularly meat containing polyunsaturated fatty acids (e.g. omega-3 fatty acids such as eicosapentaenoic acid (EPA) and docosahexaenoic acid (DHA)), rancidity is a further factor affecting consumer choice. Rancidity arises due to the decomposition of fats and oils in a foodstuff, generally by oxidation and/or microbial action, and imparts a characteristic unpleasant odour and flavour to the food. Rancidity is a particular problem affecting oily fish (e.g. salmon), pork and poultry (e.g. chicken and turkey).

The maintenance of meat colour in raw and processed meat is dependent on a number of factors. These include the choice of growth conditions for the animal (e.g. nutrition, environment, handling, etc.) and slaughter conditions, as well as processing and post-processing conditions (e.g. aging time and temperature, chemical additives, packaging conditions, display conditions, cooking conditions, etc.). Of particular importance are those factors which are applied to processed meat, especially processed raw meat, such as the environment in which the meat is stored (e.g. the oxygen level) and also the inclusion of any colour-stabilising agents.

The colour in fresh raw meat predominantly arises from the myoglobin present in the muscle tissue. In the absence of oxygen, the myoglobin exists in a deoxygenated, reduced state (Fe²⁺) known as "deoxymyoglobin" which has a dark, purplish-red colour. On exposure to oxygen, the deoxymyoglobin readily reacts to form the complex "oxymyoglobin". Oxymyoglobin is also a reduced form (Fe²⁺) of myoglobin and has a bright red colour that is typical of freshly-slaughtered meat. However, over time, oxymyoglobin (and also deoxymyoglobin) slowly oxidise to a more stable form (Fe³⁺) which is "metmyoglobin". Oxidation is typically mediated by enzymes in the meat and by colonising bacteria and results in the dull brown colour associated with deterioration in the quality of the meat.

In muscle tissue which has active enzymes that mediate metmyoglobin reduction, the reduction of metmyoglobin to deoxymyoglobin is possible, but only if the necessary cofactors are available. These cofactors are typically depleted post-slaughter and so meat containing metmyoglobin will not generally regain its red colour.

Certain compounds have been investigated for addition to meat in an attempt to replace the reducing cofactors necessary to convert metmyoglobin to the Fe²⁺ forms, but with limited success. Because of the complexities of the biochemical pathways which exist in the cell, in particular the feedback effects that various compounds have on the activity of enzymes in the pathways and the availability of substrates in the cell, it is not possible to predict accurately the effect that any given compound will have.

The effects of chemical agents typically depend on the conditions under which the meat is stored, especially the levels of oxygen present. For meat stored under low-oxygen conditions (e.g. less than about 1% O₂), reduction of metmyoglobin to deoxymyoglobin is desirable to maintain the dark purplish-red colour of the fresh meat. However, for meat stored under high-oxygen conditions (e.g. more than about 50% O₂), colour stability may be maintained to some extent due to the high levels of oxymyoglobin. Under oxygen-rich conditions, however, discolouration is observed through increased microbial action. The toughness of the meat also increases under high-oxygen conditions through protein cross-linking in the muscle. In each case, chemical agents having anti-oxidant and metmyoglobin-reducing capacities may be used to maintain colour and/or oxidative stability of the meat but the properties required under different conditions typically vary to a large extent. It is also not generally possible to predict the effects of chemicals known to have antioxidant and reducing activity under the different conditions.

Several chemical agents are known to improve colour stability in meat, including lactate (e.g. salts with sodium, potassium and calcium) and ascorbic acid. Lactate was originally investigated as an additive to reduce the presence of *Clostridium botulinum* in meat, but it can also have a positive effect on colour stability. Ascorbic acid may have positive effects but is known to diminish colour stability under certain conditions (Kropf, DH., Proceedings of the 56th American Meat Science Association Reciprocal Meat Conference, 2003, pp. 73-75).

There exists a considerable need to develop safe, colour-stabilising agents which can be used to improve the appearance, shelf-life and saleability of raw meat and raw meat-containing food products. The present invention addresses this need.

The present inventors have discovered that combinations of carboxylic acid-containing compounds, specifically succinate, glutamate, citrate (or isocitrate or aconitate), malate and, to a lesser extent, pyruvate, can be used to effect significant and long-lasting colour stabilisation in raw meats. In some cases, such combinations provide benefits that go beyond the effects of the compounds individually, i.e. certain combinations work in synergy to yield surprisingly good levels of colour stabilisation.

The compositions described herein are not only safe (and generally approved) for use in food, but can be manufactured easily and at low cost. Certain combinations of the compounds can also improve the storage-stability of meat products containing polyunsaturated fatty acids, such as salmon and poultry, thus reducing the onset and extent of rancidity.

The invention provides a method of packaging a food product comprising (e.g. consisting essentially of) uncooked meat, the method comprising contacting said product or the uncooked meat to be used therein with a composition comprising (i) succinate and glutamate and/or malate; or (ii) glutamate, malate and, optionally, citrate; and packaging said product. This packaging may be carried out under a modified atmosphere.

In another aspect, the invention provides a method of packaging, a food product comprising (e.g. consisting essentially of) uncooked meat, the method comprising contacting said product or the uncooked meat to be used therein with a composition comprising (e.g. consisting essentially of) glutamate, malate and, optionally, citrate, and packaging said product under a high-oxygen atmosphere.

The components of the composition for use in the invention are all compounds which comprise at least one carboxylic acid group or a derivative thereof (e.g. a salt). These compounds may also be referred to herein as "active components".

By "succinate" is meant succinic acid, i.e. HOOC(CH₂)₂COOH, in its fully-or partially-protonated form as well as in its fully-deprotonated form, or a salt of succinic acid with one or more physiologically acceptable counter-ions. The terms "glutamate", "malate", "citrate", "isocitrate", "aconitate" and "pyruvate" are to be interpreted in an equivalent fashion, i.e. these may be provided in fully-, partially- or de-protonated forms or in the form of a salt with one or more physiologically acceptable counter-ions. When provided in the form of a salt, suitable counter-ions which may be present include ions of the group I metals such as sodium and potassium; group II metals such as magnesium and calcium; and transition metals such as iron, copper and zinc. As will be appreciated, the counter-ions should be suitable for use in a food product, i.e. physiologically acceptable. Other suitable counter-ions include non-metal counter-ions such as the ammonium ion (NH₄⁺). Any reference herein to "salts" includes mixed salts and partial salts such as sodium potassium succinate, sodium dihydrogen citrate and the like. At physiological pH, it would be understood that the above-mentioned compounds typically exist primarily in a partially dissociated, i.e. anionic, form.

Preferred active components for use in the invention are compounds which are generally approved for food use (e.g. generally regarded as safe, "GRAS"), especially those compounds which are approved for food use in the European Union (classified by "E" numbers) and/or approved by the US Food and Drug Administration (FDA). Examples of such compounds include succinic acid (E363), glutamic acid (E620), monosodium glutamate (E621), monopotassium glutamate (E622), calcium diglutamate (E623), monoammonium glutamate (E624), magnesium diglutamate (E625), citric acid (E330), mono- di- and/or tri-sodium citrate (E331), mono- di- and/or tri-potassium citrate (E332), mono- di- and/or tricalcium citrate (E333), magnesium citrate (E345), triammonium citrate (E380), ammonium ferric citrate (E381), malic acid (E296), ammonium malate (E349), sodium and/or sodium hydrogen malate (E350), potassium malate (E351), and calcium and/or calcium hydrogen malate (E352).

Especially preferred active components are those which are essentially colourless and/or highly soluble in aqueous solution. Particularly preferred components are selected from succinic acid, glutamic acid, monosodium glutamate, citric acid, trisodium citrate, isocitric acid, trisodium isocitrate, aconitic acid, malic acid, sodium malate, pyruvic acid, sodium pyruvate and calcium pyruvate. The acidic forms of the active components (i.e. having one or more protons as the counter-ion) are also preferred.

In a preferred embodiment, one or more (e.g. all) of the active components are present both in their acidic form and also in the form of a salt of the corresponding conjugate base. For example, succinate may be added to the composition in the forms of succinic acid and sodium succinate in a ratio chosen to maintain or provide a particular pH, e.g. in the case of a liquid composition or when a solid composition is applied to meat. Especially preferred salts of the active components are as listed herein.

Compounds which possess one or more stereocentres may be provided as racemic mixtures or as partially or fully purified isomers, e.g. enantiomers or diastereomers. Preferably, optically-active compounds are provided in the natural configuration, i.e. in the configuration which is naturally found in the muscle tissue of the meat, or as a racemic mixture of isomers. Compounds containing asymmetric double bonds may be in the *cis* and/or *trans* configuration but are preferably in the natural configuration. Preferred isomeric forms of the above-mentioned compounds include L-glutamate, D-isocitrate, cis-aconitate and L-malate, as well as the salts thereof.

By "low-oxygen environment" is meant a gaseous environment containing less than about 2 mole% molecular oxygen, especially less than about 1, 0.5, 0.25, 0.15, 0.1, 0.05 or 0.01 mole% oxygen. Where the meat is beef or lamb, a low-oxygen environment is preferably less than 0.15 mole% molecular oxygen. Where the meat is pork, a low-oxygen environment is preferably less than 1 mole% molecular oxygen. The term "low-oxygen environment" is also intended to cover a non-gaseous, e.g. a liquid, environment in which the dissolved oxygen is at a level of less than 10 g/m³, especially less than 5 or 1 g/m³.

By "high-oxygen environment" is meant a gaseous environment containing more than about 2 mole%, preferably more than about 5 mole% molecular oxygen, especially more than about 25, 50, 60, 65, 70, 72, 74 or 75 mole% oxygen. Typically, high-oxygen environments contain up to about 80 mole% oxygen, e.g. around 75 mole% oxygen.

Where other gases are present in the environment in which the meat is packaged, these will typically consist of one or more gasses conventionally used in packaging food products, especially an atmospheric gas selected from nitrogen, carbon dioxide, and a noble gas (e.g. helium, neon or argon). Carbon monoxide and/or nitrous oxide may be used but are less preferred due to toxicity issues. Preferred additional gasses are carbon dioxide and nitrogen, especially nitrogen.

By "young animal" is meant an animal which is at an age where this could typically first be slaughtered for meat, e.g. lamb, calf, piglet or the like. The actual age range for a "young animal" will vary depending on the type of animal. Typical ages of young animals would be below about 4 to 6 months for cattle (calves) or below about 18 months for cattle (beef), below about 5 months for pigs and below about 3 months for sheep. Any other animal may be considered an "old animal", e.g. cattle, sheep, pigs or the like. An example of "old" animals would be beef cattle older than about 3 years.

In one embodiment, the composition for use in the invention comprises succinate and glutamate and/or malate. This combination is especially preferred for treating meat which is to be stored in a low-oxygen environment.

A preferred composition comprises succinate, glutamate and at least one of citrate, isocitrate and aconitate. A further preferred composition comprises succinate, malate and at least one of citrate, isocitrate and aconitate. An especially preferred composition comprises succinate, glutamate, malate and at least one of citrate, isocitrate and aconitate, particularly preferably succinate, glutamate, malate and citrate.

Another preferred composition comprises succinate, glutamate, malate and optionally citrate, this combination being especially preferred for use in low-oxygen environments. Yet another preferred composition comprises glutamate, malate and optionally citrate (especially one comprising glutamate, malate and citrate), this combination being especially preferred for use in high-oxygen environments.

In a preferred embodiment of the invention, the composition is essentially free of pyruvate, especially where the treated meat is to be stored in a low-oxygen environment.

The ideal amount of succinate and the other active components present in the composition may depend on a number of different factors, e.g. the nature of the meat to be treated, the age of the animal at slaughter, the time between slaughter and treatment and so on. The values listed below relate to compositions which are particularly suitable for application to meat shortly after slaughter, e.g. up to about 8 days post-mortem, especially from 2 to 6 days, particularly about 4 days, post mortem.

In one embodiment, the values listed below relate to the total amount of active components of each type present in the composition. For example, "around 55% by weight" of succinate preferably means that around 55% by weight of the total active components in the composition consists of succinates, e.g. combinations of succinic acid and/or salts thereof.

The amount of succinate present in the composition typically varies from 25-95% by weight of active components present in the composition, especially from 30-75% or 40-60%, e.g. around 55%, by weight. Preferred compositions comprise about 35-40% by weight succinate (especially where the composition comprises citrate) or about 50% by weight succinate (especially where the composition is free of citrate). Compositions having these preferred succinate levels are especially suitable for use at low oxygen concentrations. The actual or relative amount of succinate required in the composition may increase as the age of the meat (post-mortem) increases. For example, meat which is not freshly slaughtered may be treated with a composition comprising from 40-80% succinate (by weight of active components present in the composition), preferably from 50-65% succinate. Treatment with compositions having increased levels of succinate may typically be performed after meat has been aged or matured, for example after a period of around 4, 6 or 8 days post mortem, e.g. between 10 and 28 days post-mortem for beef. Where the meat is to be stored at high-oxygen concentrations, the levels of succinate may be lower than set out above, typically up to 30% by weight, e.g. around 5-15% by weight. In one embodiment the compositions are essentially free from succinate. For example, these may comprise less than 5%, e.g. less than 2%, preferably less than 1% by weight succinate.

Glutamate is typically present in an amount of from 0-75%, e.g. from 0-50% by weight of active components present in the composition, especially from 10-30%, e.g. about 20%, by weight. For treating meat to be stored under low-oxygen conditions, the levels of glutamate are preferably around 15-30% by weight, especially about 18% or about 25% by weight. For treating meat to be stored under high-oxygen conditions, the levels of glutamate are preferably around 25-75% by weight, especially about 40-70%, e.g. about 50%, by weight.

Malate is typically present in an amount of from 0-75%, e.g. from 0-40% by weight of active components present in the composition, especially from 5-25%, e.g. about 10%, by weight. For treating meat to be stored under low-oxygen conditions, the levels of malate are preferably around 15-30% by weight, especially about 18% or about 25% by weight. For treating meat to be stored under high-oxygen conditions, the levels of malate are preferably around 30-60% by weight, especially about 40% or about 50% by weight.

Where glutamate and malate are both present, they may be considered in combination as a single "component" of the composition. The total amount of glutamate and malate together preferably comprise up to 80% by weight of active components present in the composition, especially from 15-55% by weight, e.g. about 30% by weight. The ratio of glutamate to malate may vary between 1:0 to 0:1, especially between 3:1 to 1:3, e.g. between 3:1 to 1:1, especially about 2:1 or about 1:1.

Citrate, isocitrate and/or aconitate are typically present in a total amount of from 0-50% by weight of active components present in the composition, especially from 10-30%, e.g. about 15%, by weight. The amount of citrate in the compositions of the invention is preferably up to 30% by weight, e.g. about 25% by weight.

Pyruvate is typically present in an amount of from 0-75% by weight of active components present in the composition, especially an amount of less than 10%, 5%, 2%, 1% or 0.5% by weight where the composition is for use in treating meat which is to be stored in a low-oxygen environment and an amount of between 25% and 60%, e.g. about 40%, by weight where the meat is to be stored in a high-oxygen environment. In an alternative embodiment, where meat is to be stored in a high-oxygen environment, the composition may comprise little or no pyruvate, e.g. less than 5%, 2%, 1% or 0.5% by weight of pyruvate.

The total amount of the composition added to the uncooked meat, or the food product comprising uncooked meat, will generally be in the range of 2-40 g/kg (based on the total weight of active components in the composition per kg of meat or meat-containing food product), i.e. in the range of 0.2-4% by weight. Preferably, the composition is added in an amount of from 5-30 g/kg (0.5-3% by weight), especially from 10-20 g/kg (1-2% by weight). An amount of about 7.5, 10, 15 or 20 g/kg (0.75, 1, 1.5 or 2% by weight) is particularly preferred, especially about 20 g/kg (2% by weight).

In another embodiment, any of the wt.% values listed herein in relation to the amount of any active agent in the composition, or the ratio of any active agents, may also be chosen in determining the desired amount of active on a molar basis (i.e. mol% of the active agent(s) in the composition). As will be appreciated, these values will not necessarily be identical because of differences in the molecular weights of the various active components. Where reference is made herein to an amount of 25-95% by weight of succinate, for example, this may instead be replaced by 25-95 mol% of succinate in the composition. As a further example, instead of around 55% by weight of succinate, around 55 mol% of succinate, e.g. an amount of succinate of around 55 millimoles per kg of meat (where 100 mol% denotes 0.1 moles per kg of meat), may be used.

In terms of the molar amounts of active components which may be added to the meat or meat-containing product, 100 mol% of each component typically represents a value in the range of up to 0.2 moles per kg of meat or meat-containing food product, especially up to 0.15 or 0.1 moles per kg, e.g. about 0.1 moles per kg. In another embodiment, 100 mol% of each component typically represents a value of at least 0.005 moles per kg, e.g. at least 0.01 or 0.02 moles per kg. Where the meat or meat-containing product is to be packaged under low-oxygen conditions, 100 mol% of each component preferably represents a value of 0.01 to 0.1 moles per kg, e.g. around 0.05 or 0.075 moles per kg. Where the meat or meat-containing product is to be packaged under high-oxygen conditions, 100 mol% of each component preferably represents a value of 0.05 to 0.2 moles per kg, e.g. around 0.1 or 0.15 moles per kg.

Where the composition is mixed with a meat-containing product, e.g. minced meat, or sprayed directly onto the product, e.g. a cut of raw meat, it will typically comprise the mass (or molar proportion) of individual components recited above. Alternatively, where the composition is contacted with the meat-containing product by dipping or soaking, the amounts of each component in the treatment composition will typically be much greater than listed above. However, each component will typically be present in the same ratio as defined herein and the treatment process is optimised to provide the product with the above-mentioned masses of each component after treatment. This may be determined, for example, by performing the process on a number of test products under different conditions (concentrations, times, temperatures etc.) and analysing the treated products to determine the quantity of components taken up using standard equipment.

The absolute amounts of each component in the composition will depend on the amount of composition required, e.g. depending on the amount of meat-containing product to be treated. However, as the composition will typically comprise the active components listed above (especially when the composition is a solid composition), the amount of each component by weight of the composition may be calculated using the percentages by weight listed above. In the event that one or more diluents, carriers or other inert agents (i.e. an agent not having a significant effect on the colour stability and/or rancidity of a treated meat product) are included in the composition, the amount of each component by weight will be altered proportionally.

Preferably, the active components of the composition will be present in the following ratios by weight (or by molar proportion):
- where the composition comprises (e.g. consists essentially of) succinate and glutamate, these are preferably present in a ratio of from 9:1 to 1:1 succinate:glutamate, preferably from 8:2 to 7:3, e.g. about 11:4.
- where the composition comprises (e.g. consists essentially of) succinate and malate, these are preferably present in a ratio of from 19:1 to 6:4 succinate:malate, preferably from 9:1 to 8:2, e.g. about 11:2.
- where the composition comprises (e.g. consists essentially of) succinate, glutamate and malate, these are preferably present in a ratio of from 17:2:1 to 5:3:2 succinate:glutamate:malate, e.g. about 11:4:2. A preferred composition, especially for use with meat to be stored under low-oxygen conditions, has a ratio of about 2:1:1 succinate:glutamate:malate. The ratio of succinate to (glutamate + malate) is preferably between 4:1 and 1:1, e.g. about 2:1. A preferred composition, especially for use with meat to be stored under low-oxygen conditions, has a ratio of succinate to (glutamate + malate) of about 1:1.
- where the composition comprises (e.g. consists essentially of) succinate, glutamate and malate with one or more of citrate, isocitrate and aconitate, these are preferably present in a ratio of about 11:4:2:3 succinate:glutamate:malate: (total citrate, isocitrate and/or aconitate). A preferred composition, especially for use with meat to be stored under low-oxygen conditions, has a ratio of about 6:3:3:4 succinate:glutamate:malate: (total citrate, isocitrate and/or aconitate). The ratio of succinate to (glutamate + malate) to (total citrate, isocitrate and/or aconitate) is preferably about 4:2:1, especially preferably about 3:3:2 where the composition is for use with meat to be stored under low-oxygen conditions.
- where the composition comprises (e.g. consists essentially of) glutamate, malate and citrate, these are preferably present in a ratio of from 3:1:0 to 1:3:1 glutamate:malate:citrate. The ratio of (glutamate + malate) to citrate is preferably between 1:0 to 3:1.

In a preferred embodiment, at least one of the active components is present in the form of the acid and also as a salt of the conjugate base of said acid. Preferably, the ratio of acid to conjugate base is such as to provide the composition with a desired pH as herein described. In a preferred embodiment, the molar ratio of an acid to its conjugate base for one or more of the active components comprising said forms is in the range of 9:1 to 1:9, e.g. from 17:3 to 1:1, especially around 4:1. In an especially preferred embodiment, the composition comprises succinic acid and sodium succinate in a molar ratio of approximately 4:1.

Compositions for use in the methods of the invention will typically be in liquid or solid form. Alternatively, the composition may be in the form of a colloid, e.g. an emulsion, or a gel. A liquid composition is generally provided as a solution of the active components in a food-grade liquid, e.g. as an aqueous solution in water, in oil and/or in brine, or as an alcoholic solution. For solutions made up in brine, the solution may comprise salt (e.g. sodium chloride) at a concentration of between 0.1 and 2 M, especially about 1 M. For the present purposes, sodium chloride is not considered as an active component, even though it may have some effects on the storage and/or colour stability of a treated meat product. The compositions are typically added to the meat so as to keep the pH of the meat around or below about 5.8. Aqueous solutions may be alkaline or acidic but are typically slightly acidic, e.g. having a pH of 5 to 7, especially a pH of about 6, such as 5.8. Alkalinity may, for example, be achieved using any food-grade alkali, e.g. sodium hydroxide or sodium bicarbonate. A solid composition will typically be provided as a powder, e.g. as a spray-dried powder, prepared in a conventional fashion. Gels and emulsions, may be prepared using conventional additives, for example food-grade hydrocolloids such as xanthan gum, gum arabic and carboxymethyl cellulose.

The methods of the invention may be applied to any uncooked meat-containing product, e.g. cuts of raw meat, minced meats, cured meats and the like. The source of the meat may be one or more animals which typically provide meat intended for human or animal consumption (e.g. pet foods). Preferably, the meat will be intended for human consumption. Suitable animals for sourcing the meat include farm animals (e.g. cattle, sheep, pigs, goats, etc.), poultry (e.g. chickens, turkeys, etc.), fish (e.g. pelagic fish such as salmon, trout, mackerel, sardines, tuna, herring, etc.) and wild animals (e.g. deer, ostrich, alligators, etc.). The meat to be treated is preferably a red meat, e.g. meat which contains a visually-observable amount of myoglobin at the surface. Meat from young and old animals, as defined herein, may be used. The methods described herein are also particularly suitable for the treatment of fatty fish, e.g. fish which are particularly prone to rancidity on storage, especially salmon, mackerel and tuna.

The meat may be in unitary pieces, in chunks, or diced or minced as is conventional in the food industry. Where the meat-containing product comprises other ingredients, these may be any appropriate food material, e.g. pastry, rice, pasta, sauces, vegetables, etc.

Treatment of the meat or meat-containing product may be carried out using known methods of application. For example, treatment of a meat-containing product with a liquid composition may be by mixing, spraying, dipping, coating, etc. Treatment with a solid composition will typically be by mixing, sprinkling, etc. The meat may be treated with a composition using known coating methods to provide so-called "active packaging", e.g. a thin film of a hydrocolloid gel or the like comprising the active components to control moisture or oxygen ingress. Where the composition remains on the surface of the meat after treatment, this may be retained or washed off prior to packaging.

The meat or meat-containing product is packaged, e.g. in a modified atmosphere. Methods for modified atmosphere packaging (MAP) of food products, e.g. meat-containing products, are well known and include packaging in containers made of metal and/or plastic materials, foil packaging, foil-sealed trays, plastic film, etc. Where the meat-containing product consists essentially of meat, the packaging preferably includes a moisture-absorbent pad.

Packaging of the products using MAP will typically be under low-oxygen or high-oxygen conditions as defined herein. In this case, the packaging will typically be hermetically sealed to prevent escape of the modified atmosphere. Alternatively, where the meat-containing product is packaged under essentially atmospheric conditions, at least a part of the packaging will typically be gas-permeable.

Once packaged, the meat-containing product will typically be stored for a period of time, for example before and/or during transport and in the retail outlet. Suitable conditions for storage (e.g. temperature) may readily be determined. The period of time on storage will typically be in the order of 1-15 days, e.g. from 3 to 12 days, especially around 6, 7 or 8 days. Storage for a period of time of at least 3 days, e.g. at least 5, 6, 8, 10 or 12 days is preferred, for example before the modified atmosphere is removed or replaced with another atmosphere. Meat products packaged under a low-oxygen atmosphere are preferably stored for a period of at least 6 days, especially at least 10 days, e.g. around 13 days. Meat products packaged under a high-oxygen atmosphere are preferably stored for a period of up to 6 days, e.g. around 4 days.

The effects of the compositions defined herein on the colour of meat-containing products may be determined according to known methods. For example, the change in colour over time may be assessed using near-infrared (NIR) reflectance, e.g. at wavelengths between 400 and 2500 nm, using conventional equipment. Changes in colour may conveniently be, described using the parameters of the "CIELAB" system where L^{*} represents lightness (L* = 0 yields black and L* = 100 indicates diffuse white), a^{*} represents the position between red/magenta and green (negative values of a^{*} indicate green while positive values indicate magenta) and b^{*} represents the position between yellow and blue (negative values of b^{*} indicate blue and positive values indicate yellow). A low b^{*} value (more blue) is indicative of a favourable colour in uncooked meat, as is a high a^{*} value (more red)

The combinations of active components herein described are in themselves novel and thus form a further aspect of the invention.

In a further aspect the invention thus provides a composition comprising (e.g. consisting essentially of) succinate and glutamate and/or malate, wherein succinate is present in an amount of from 25 to 95% by weight of active components. Such a composition may be provided in accordance with any of the specific embodiments herein described in relation to the methods of the invention.

The invention further extends to a composition comprising (e.g. consisting essentially of) glutamate, malate and, optionally citrate, wherein malate is present in an amount of from 5 to 25% by weight of active components. Such a composition may be provided in accordance with any of the specific embodiments herein described in relation to the methods of the invention. In particular, this composition may be essentially free from pyruvate and/or succinate.

The compositions according to the invention will typically be provided in the form of a powder (e.g. a granulate) which may be dispersed or dissolved in an aqueous or alcoholic solution at the point of use. Alternatively, these may be provided in ready-to-use form, e.g. in the form of a liquid.

A particularly preferred composition according to the invention comprises succinate, glutamate, citrate and malate in a ratio of about 11:4:3:2. Preferred compositions do not comprise pyruvate.

In a further aspect, the invention relates to the use of a composition as defined herein in a method of the invention.

The invention will now be further described with reference to the following non-limiting Examples and Figures in which:

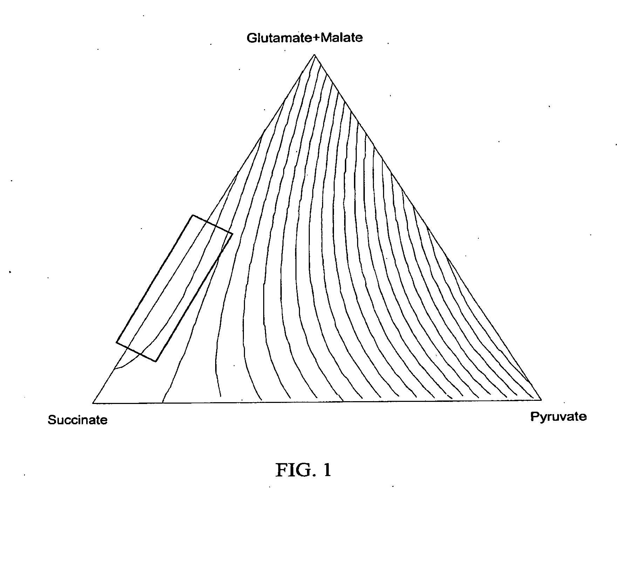

Figure 1 shows a response surface calculated for the effect of varying concentrations of succinate, pyruvate and glutamate+malate (as a single variable) on the a* values of treated meat after 6 days storage. The contours show the change in a* values, with the contours to the far right being the lowest values and those to the far left being the highest values. The bold rectangle shows the region of the plot containing the maximum a^{*} value.

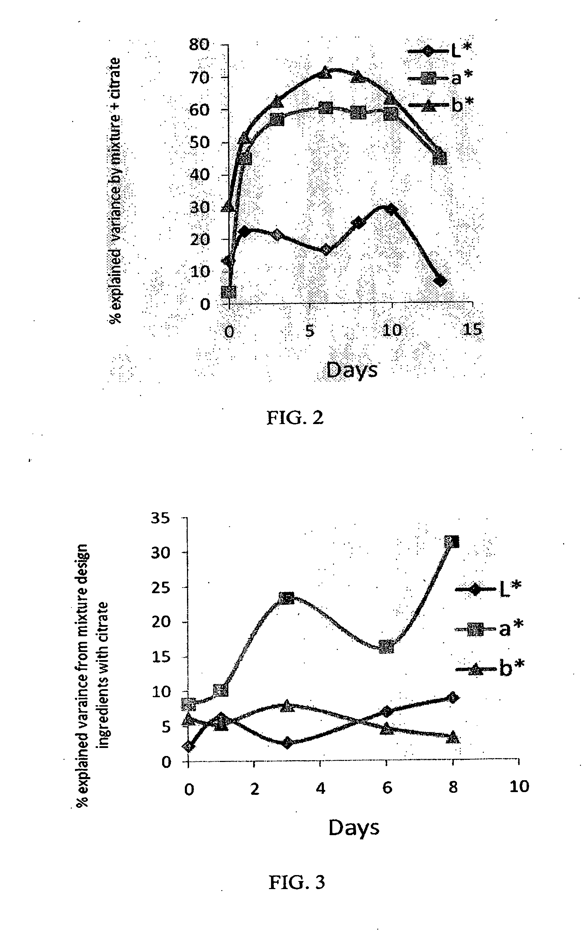

Figure 2 shows the percent variance calculated over time by mixture of the components (succinate, glutamate, malate and citrate) for the low-oxygen concentration samples. The graph indicates the contribution that the components make to the changes in L^{*}, a^{*} and b^{*} values at different days.
Figure 3 shows the percent variance calculated over time by mixture of the components (succinate, glutamate, malate and citrate) for the high-oxygen concentration samples. The graph indicates the contribution that the components make to the changes in L^{*}, a^{*} and b^{*} values at different days.

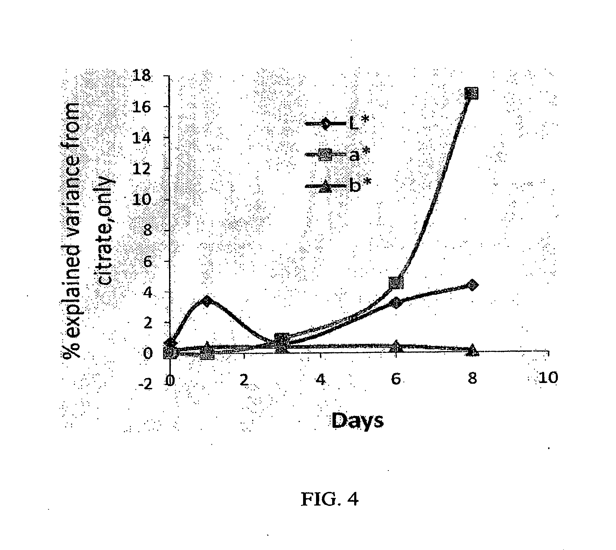

Figure 4 shows the percent variance calculated over time by citrate concentration for the high-oxygen concentration samples. The graph indicates the contribution that the citrate concentration makes to the changes in L*, a* and b* values at different days.

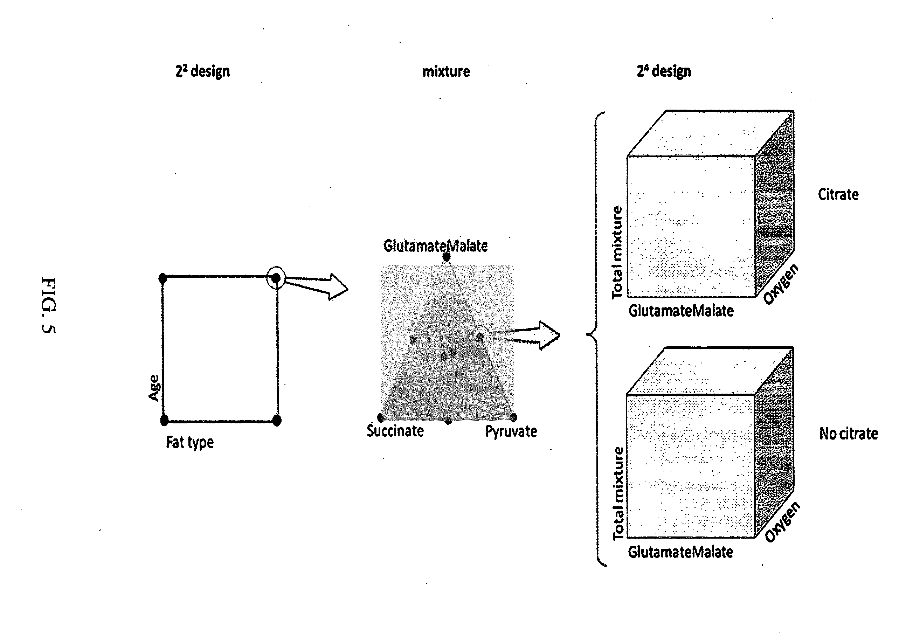

Figure 5 shows an experimental design that is 2² factorial design in age and fat type. To each point was added an 8-point simplex centroid mixture design (7 experimental points and 1 replicate, see triangle) and thereafter a 2⁴ design illustrated by two cubes. Arrows indicate that one experimental point is described by the next design. Each corner of the 22 design was measured on one day. For further details see Example 5 (Materials and methods).

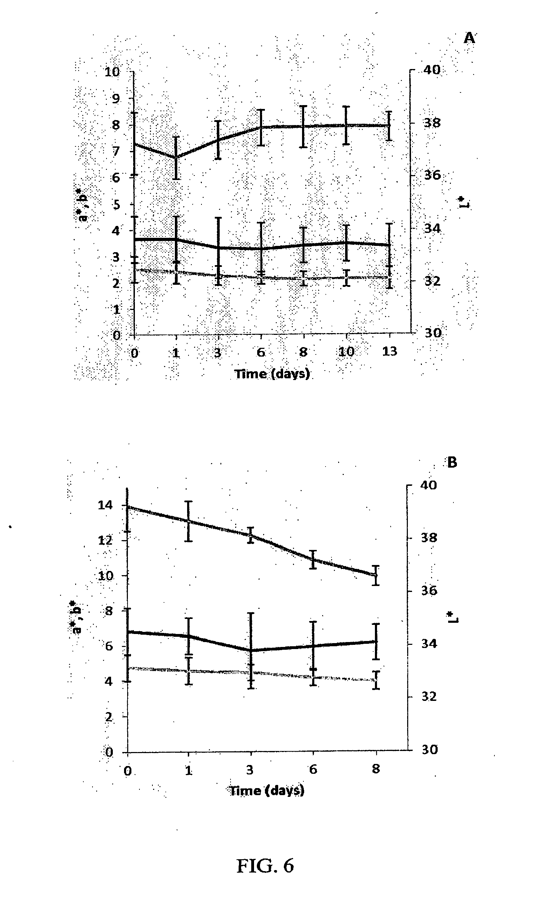

Figure 6 shows average L*, a*, b*values (156 samples) versus time for low (A) and high oxygen (B) packaging. Black, dark grey and grey represent L*, a* and b^{*}, respectively, where a* and b* related to ordinate is on the left side and L* relate to the ordinate on right side of each figure. Error bars are standard deviations.

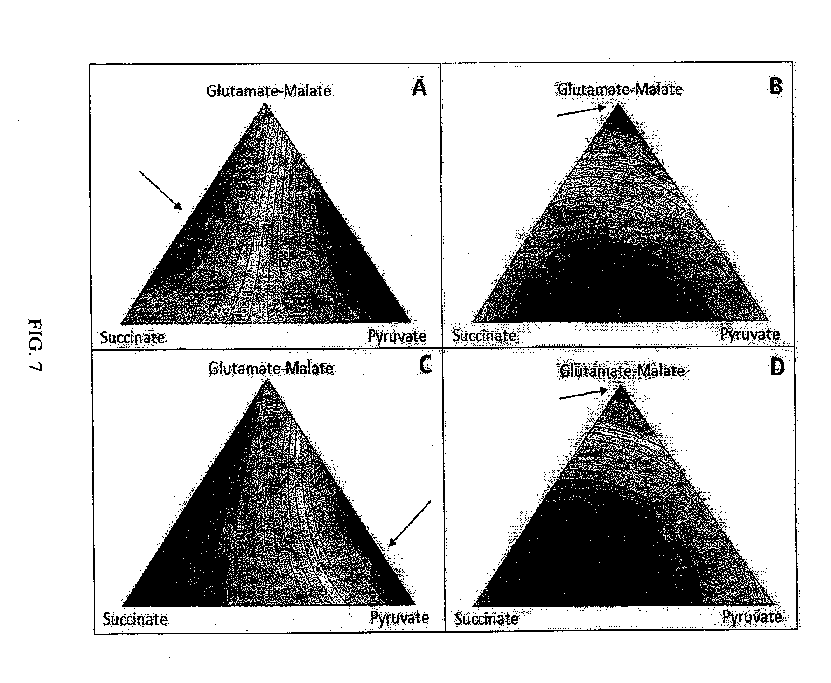

Figure 7 shows a model fit (adjusted means) of a^{*} and b^{*} colour measurements as a response to treatment with different additives; each corner represents a brine with one additive. a* is represented in A and B, and b* is represented in C and D. Samples were measured at day 3 of packaging. Samples packed in low oxygen are located in A and C, and samples in high oxygen are located in B and D. Colour codes are a gradient from red to blue, where red is the highest response (indicated in each case by an arrow) and blue is the lowest response for both variables. The lines and colours represent a smooth transition from lowest to highest value; the max and min values; the max-min is different for each panel: A) 5.0-9.5; B)11.4-13-3; C)1.2-3-7; D)4.2-4.9. The data are not normalized.

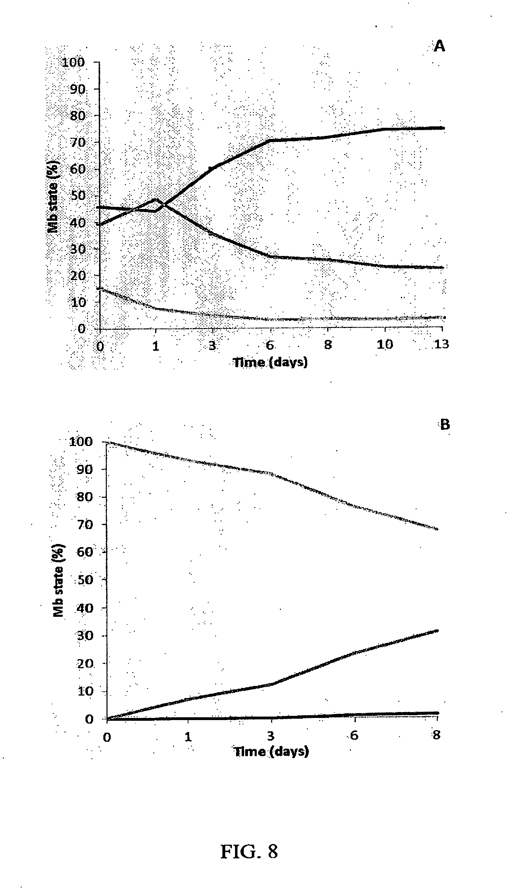

Figure 8 shows a percentage distribution of DMb, OMb and MMb versus time for low (A) and high (B) oxygen packaging. Black, dark grey and grey represent DMb, MMb and OMb, respectively. The ordinate shows the relative amount of each myoglobin state at the respective day and error bars are standard deviations. The error bars are too small to be visible.

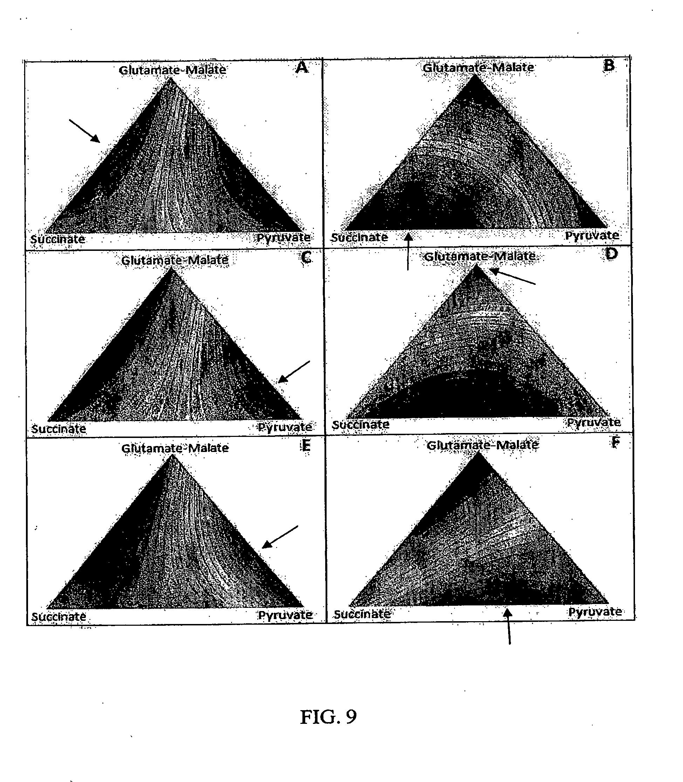

Figure 9 shows model fitted not normalized myoglobin measurements as a response to treatment with different additives; each corner represents brine with a sole additive. DMb is represented in A and B, OMb is represented in C and D, and MMb is represented in E and F. Samples were measured at day 3 of the experiment. Samples packed in low oxygen are located in A, C and E, and samples in high oxygen are located in B, D and F. Colour codes are a gradient from red to blue, where red is the highest response (marked in each case with an arrow) and blue is the lowest response for all three states. The lines represent a smooth transition from lowest to highest value; the max and min values: for A, C, E the range is from 0.03 to 1.03; -0.06 to 0.84; and -0.02 to 0.09 respectively; for B, D and F the range is from -0.1 to -0.06; 0.79 to 0.94; and 0.08 to 0.16, respectively. The data are not normalized.

### Example 1 - Treatment of meat with various components

### Chemicals and other materials

The following compounds were sourced from Alfa Aesar GmbH & Co KG (Karlsmhe, Germany): sodium succinate hexa-hydrate, succinic acid, and pyruvic acid. The following chemicals were purchased from Sigma-Aldrich Chemie GmbH (Steinheim, Germany): sodium pyruvate, glutamic acid, malic acid and DL-malic acid disodium salt. Sodium hydrogen glutamate monohydrate was purchased from VWR International BVBA (Leuven, Belgium). Citric acid monohydrate and trisodium citrate were purchased from Merck KGaA (Darmstadt, Germany). All chemicals were of analytical quality.

Plastic film for packing was BIAXER 65 XX HFPAFM (oxygen permeable at 5 and 7 ml) and was purchased from Wipak, Nastola, Finland. The samples were packaged in conventional black HDPE boxes.

Beef fat and pork fat (high degree of unsaturation) were used with raw semimembranosus muscle from young and old cattle. Beef from the hind leg was removed, weighed, chopped, mixed with fat (14% by weight), and the various test compounds were added to the minced meat. The mixtures were packed into boxes and sealed with plastic sheeting. Packing was done with MAP to yield a low-oxygen atmosphere (60% CO₂ and 40% N₂) and also under a high-oxygen atmosphere (75% oxygen and 25% CO₂). The samples were stored in darkness at 4°C from 0 to 8 days for the high-oxygen atmosphere and 0 to 13 days for the MAP samples. A Cheers Packaging Machine (Promens) was used for packaging of samples. Triplicate reference samples with only 40 ml of distilled water mixed and packaged as described above were evaluated at days 6 and 8 for the high-oxygen environment and at days 6, 8, 10 and 13 for the MAP environment.

Beef and pork fat and meat from young and old animals (approximately 1 year and 4 years, respectively) was used to investigate the system because (1) pork fat is typically more oxidative than beef fat and (2) older animals typically have more colour pigment in the flesh.

### Preparation of test compound samples

Samples of test compounds were prepared with succinate, glutamate, malate, pyruvate and citrate in different combinations, either as single chemicals or as mixtures. The acid and conjugate base of each active component was added in the appropriate ratio to provide the solutions (brines) with a pH of 5.8. As will be clear from the foregoing description, the "succinate" used in this experiment was a combination of succinic acid and sodium succinate. The "glutamate", "malate", etc. were used equivalently.

Meat and fat was cut into small pieces and minced (3 mm holes). 40g of brine was added to 360g mince and packed in the plastic packing.

### Design of the experiment

Several variables were included in the design of the experiment, using a 2³ factorial design. Fatty acid composition (pork/beef), cattle age and O₂ concentration were varied as well as the concentrations of citrate, pyruvate, succinate, malate and glutamate. Malate and glutamate were considered together in the design and analysis, but their ratio was varied in the experiments from pure malate to pure glutamate.

Four experiments with 39 samples and two reference samples were performed during each trial, i.e. a total of 156 samples and 8 "blind" samples.

### Colour analysis

Colour changes in the samples were measured with a FOSS NIRSystems™ 6500 analyser and a Konica Minolta Chroma meter CR 410 (Konica Minolta Sensing Inc., Osaka, Japan). Colour was measured using the parameters L^{*}, a^{*} and b^{*} at 0, 1, 3, 6 and 8 days for samples stored in 75 % oxygen. Colour changes of the samples packaged in MAP were measured at 0, 1, 3, 6, 8, 10 and 13 days of storage time.

### Results

Results from the experiments carried out on the various meat and fat samples are shown below in Tables 1 to 8. Values given for the amount of active agents in Tables 1 to 8 correspond to the molar proportion of the given agent within the brine/meat mixture, where a value of 1 corresponds to 0.1 moles active agent per kg of meat, a value of 0.5 corresponds to 0.05 mol/kg, etc. Each Table shows the results for a different sample type, i.e. young beef muscle with beef fat in a low oxygen environment (Table 1). The b* values, which are considered to be most representative of the colour changes in the meat being tested, are shown. All results correspond to measurements made on day 6 of storage

**Table .1 - Effect on b* of different compounds on young beef muscle mixed with beef fat at low oxygen (MAP)**

| Citrate | Succinate | Pyruvate | Glutamate/Malate | b* | std. dev |
|---|---|---|---|---|---|
| | | | | | |
| 0.00 | 1.00 | 0.00 | 0.00 | 1.07 | 0.15 |
| 0.25 | 0.78 | 0.00 | 0.22 | 1.23 | 0.14 |
| 0.00 | 0.50 | 0.00 | 0.50 | 1.27 | 0.14 |
| 0.25 | 1.00 | 0.00 | 0.00 | 1.32 | 0.19 |
| 0.25 | 0.50 | 0.00 | 0.50 | 1.37 | 0.14 |
| 0.00 | 0.00 | 0.00 | 1.00 | 1.75 | 0.19 |
| 0.00 | 0.50 | 0.50 | 0.00 | 1.88 | 0.14 |
| 0.25 | 0.50 | 0.50 | 0.00 | 2.08 | 0.14 |
| 0.25 | 0.33 | 0.33 | 0.33 | 2.28 | 0.09 |
| 0.00 | 0.33 | 0.33 | 0.33 | 2.34 | 0.09 |
| 0.25 | 0.00 | 0.00 | 1.00 | 2.34 | 0.19 |
| 0.00 | 0.00 | 0.00 | 0.00 | 2.63 | 0.10 |
| 0.25 | 0.00 | 0.50 | 0.50 | 3.58 | 0.14 |
| 0.00 | 0.00 | 0.50 | 0.50 | 3.87 | 0.14 |
| 0.25 | 0.00 | 1.00 | 0.00 | 4.00 | 0.19 |
| 0.00 | 0.00 | 1.00 | 0.00 | 4.24 | 0.19 |
| 0.00 | 0.00 | 0.86 | 0.14 | 4.31 | 0.15 |

**Table 2 - Effect on b* of different compounds on young beef muscle mixed with pork fat at low oxygen (MAP)**

| Citrate | Succinate | Pyruvate | Glutamate/Malate | b* | std. dev |
|---|---|---|---|---|---|
| | | | | | |
| 0.00 | 0.92 | 0.08 | 0.00 | 1.32 | 0.16 |
| 0.00 | 1.00 | 0.00 | 0.00 | 1.34 | 0.18 |
| 0.00 | 0.50 | 0.00 | 0.50 | 1.44 | 0.14 |
| 0.25 | 0.26 | 0.00 | 0.74 | 1.60 | 0.14 |
| 0.25 | 0.50 | 0.00 | 0.50 | 1.71 | 0.14 |
| 0.25 | 0.00 | 0.00 | 1.00 | 1.73 | 0.19 |
| 0.00 | 0.00 | 0.00 | 1.00 | 1.83 | 0.19 |
| 0.00 | 0.50 | 0.50 | 0.00 | 1.86 | 0.14 |
| 0.00 | 0.00 | 0.00 | 0.00 | 2.14 | 0.31 |
| 0.25 | 0.33 | 0.33 | 0.33 | 2.15 | 0.09 |
| 0.25 | 0.50 | 0.50 | 0.00 | 2.19 | 0.14 |
| 0.00 | 0.33 | 0.33 | 0.33 | 2.35 | 0.09 |
| 0.25 | 1.00 | 0.00 | 0.00 | 2.59 | 0.19 |
| 0.25 | 0.00 | 0.50 | 0.50 | 2.75 | 0.14 |
| 0.25 | 0.00 | 1.00 | 0.00 | 2.94 | 0.19 |
| 0.25 | 0.00 | 0.86 | 0.14 | 2.97 | 0.15 |
| 0.00 | 0.00 | 0.50 | 0.50 | 3.75 | 0.14 |
| 0.00 | 0.00 | 1.00 | 0.00 | 3.93 | 0.14 |
| 0.00 | 0.00 | 0.80 | 0.20 | 4.07 | 0.12 |

**Table 3 - Effect on b* of different compounds on old beef muscle mixed with beef fat at low oxygen (MAP)**

| Citrate | Succinate | Pyruvate | Glutamate/M alate | b* | std. dev |
|---|---|---|---|---|---|
| | | | | | |
| 0.25 | 0.60 | 0.00 | 0.40 | 0.81 | 0.14 |
| 0.25 | 0.50 | 0.00 | 0.50 | 0.83 | 0.14 |
| 0.25 | 1.00 | 0.00 | 0.00 | 1.10 | 0.19 |
| 0.00 | 0.32 | 0.00 | 0.68 | 1.21 | 0.13 |
| 0.00 | 0.50 | 0.00 | 0.50 | 1.23 | 0.14 |
| 0.00 | 0.00 | 0.00 | 1.00 | 1.27 | 0.14 |
| 0.00 | 0.50 | 0.50 | 0.00 | 1.47 | 0.14 |
| 0.00 | 1.00 | 0.00 | 0.00 | 1.48 | 0.18 |
| 0.25 | 0.00 | 0.00 | 1.00 | 1.48 | 0.19 |
| 0.25 | 0.50 | 0.50 | 0.00 | 1.77 | 0.14 |
| 0.25 | 0.33 | 0.33 | 0.33 | 1.78 | 0.09 |
| 0.00 | 0.00 | 0.00 | 0.00 | 1.82 | 0.02 |
| 0.00 | 0.33 | 0.33 | 0.33 | 1.90 | 0.09 |
| 0.25 | 0.00 | 0.50 | 0.50 | 2.95 | 0.14 |
| 0.00 | 0.00 | 1.00 | 0.00 | 3.00 | 0.19 |
| 0.00 | 0.00 | 0.50 | 0.50 | 3.01 | 0.14 |
| 0.00 | 0.00 | 0.74 | 0.26 | 3.23 | 0.14 |
| 0.25 | 0.00 | 1.00 | 0.00 | 3.60 | 0.19 |

**Table 4 - Effect on b* of different compounds on old beef muscle mixed with pork fat at low oxygen (MAP)**

| Citrate | Succinate | Pyruvate | Glutamate/Malate | b* | std. dev |
|---|---|---|---|---|---|
| | | | | | |
| 0.00 | 0.94 | 0.06 | 0.00 | 0.97 | 0.13 |
| 0.00 | 1.00 | 0.00 | 0.00 | 0.98 | 0.15 |
| 0.25 | 0.32 | 0.00 | 0.68 | 1.02 | 0.14 |
| 0.00 | 0.50 | 0.00 | 0.50 | 1.06 | 0.13 |
| 0.25 | 0.50 | 0.00 | 0.50 | 1.07 | 0.14 |
| 0.25 | 0.00 | 0.00 | 1.00 | 1.21 | 0.19 |
| 0.00 | 0.00 | 0.00 | 1.00 | 1.44 | 0.14 |
| 0.00 | 0.50 | 0.50 | 0.00 | 1.56 | 0.13 |
| 0.25 | 1.00 | 0.00 | 0.00 | 1.85 | 0.19 |
| 0.25 | 0.33 | 0.33 | 0.33 | 2.00 | 0.09 |
| 0.00 | 0.33 | 0.33 | 0.33 | 2.01 | 0.09 |
| 0.25 | 0.50 | 0.50 | 0.00 | 2.23 | 0.14 |
| 0.25 | 0.00 | 0.50 | 0.50 | 2.90 | 0.14 |
| 0.00 | 0.00 | 0.00 | 0.00 | 3.12 | 0.18 |
| 0.00 | 0.00 | 0.50 | 0.50 | 3.43 | 0.13 |
| 0.00 | 0.00 | 1.00 | 0.00 | 3.67 | 0.14 |
| 0.25 | 0.00 | 1.00 | 0.00 | 3.77 | 0.19 |
| 0.00 | 0.00 | 0.82 | 0.18 | 3.79 | 0.12 |

**Table 5 - Effect on b* of different compounds on young beef muscle mixed with beeffat at high oxygen**

| Citrate | Succinate | Pyruvate | Glutamate/Malate | b* | std. dev |
|---|---|---|---|---|---|
| | | | | | |
| 0.25 | 0.64 | 0.00 | 0.36 | 3.74 | 0.25 |
| 0.25 | 0.50 | 0.00 | 0.50 | 3.77 | 0.25 |
| 0.25 | 1.00 | 0.00 | 0.00 | 3.96 | 0.33 |
| 0.00 | 0.98 | 0.02 | 0.00 | 4.01 | 0.32 |
| 0.00 | 1.00 | 0.00 | 0.00 | 4.01 | 0.33 |
| 0.25 | 0.33 | 0.33 | 0.33 | 4.07 | 0.16 |
| 0.25 | 0.50 | 0.50 | 0.00 | 4.20 | 0.25 |
| 0.00 | 0.50 | 0.00 | 0.50 | 4.27 | 0.25 |
| 0.00 | 0.50 | 0.50 | 0.00 | 4.32 | 0.25 |
| 0.00 | 0.33 | 0.33 | 0.33 | 4.34 | 0.16 |
| 0.25 | 0.00 | 0.00 | 1.00 | 4.44 | 0.33 |
| 0.25 | 0.00 | 0.50 | 0.50 | 4.45 | 0.25 |
| 0.00 | 0.00 | 0.00 | 1.00 | 4.62 | 0.26 |
| 0.00 | 0.00 | 0.50 | 0.50 | 4.66 | 0.24 |
| 0.25 | 0.00 | 1.00 | 0.00 | 4.71 | 0.33 |
| 0.00 | 0.00 | 0.00 | 0.00 | 4.95 | 0.33 |
| 0.00 | 0.00 | 1.00 | 0.00 | 5.32 | 0.26 |

**Table 6 - Effect on b* of different compounds on young beef muscle mixed with pork fat at high oxygen**

| Citrate | Succinate | Pyruvate | Glutamate/Malate | b* | std. dev |
|---|---|---|---|---|---|
| | | | | | |
| 0.25 | 0.60 | 0.00 | 0.40 | 4.45 | 0.25 |
| 0.25 | 0.50 | 0.00 | 0.50 | 4.47 | 0.25 |
| 0.25 | 0.33 | 0.33 | 0.33 | 4.49 | 0.16 |
| 0.00 | 0.62 | 0.38 | 0.00 | 4.50 | 0.23 |
| 0.00 | 0.50 | 0.50 | 0.00 | 4.51 | 0.24 |
| 0.25 | 0.50 | 0.50 | 0.00 | 4.53 | 0.25 |
| 0.00 | 0.33 | 0.33 | 0.33 | 4.57 | 0.16 |
| 0.25 | 0.00 | 1.00 | 0.00 | 4.58 | 0.33 |
| 0.00 | 0.00 | 0.50 | 0.50 | 4.66 | 0.24 |
| 0.25 | 0.00 | 0.50 | 0.50 | 4.69 | 0.25 |
| 0.00 | 1.00 | 0.00 | 0.00 | 4.70 | 0.26 |
| 0.25 | 1.00 | 0.00 | 0.00 | 4.73 | 0.33 |
| 0.00 | 0.50 | 0.00 | 0.50 | 4.77 | 0.24 |
| 0.00 | 0.00 | 0.00 | 1.00 | 4.92 | 0.26 |
| 0.00 | 0.00 | 1.00 | 0.00 | 5.02 | 0.33 |
| 0.25 | 0.00 | 0.00 | 1.00 | 5.05 | 0.33 |
| 0.00 | 0.00 | 0.00 | 0.00 | 5.42 | 0.08 |

**Table 7 - Effect on b* of different compounds on old beef muscle mixed with beef fat at high oxygen**

| Citrate | Succinate | Pyruvate | Glutamate/Malate | b* | std. dev |
|---|---|---|---|---|---|
| | | | | | |
| 0.00 | 0.54 | 0.46 | 0.00 | 3.17 | 0.24 |
| 0.00 | 0.50 | 0.50 | 0.00 | 3.17 | 0.24 |
| 0.25 | 0.00 | 1.00 | 0.00 | 3.31 | 0.33 |
| 0.00 | 1.00 | 0.00 | 0.00 | 3.45 | 0.26 |
| 0.25 | 0.50 | 0.50 | 0.00 | 3.46 | 0.25 |
| 0.25 | 0.33 | 0.33 | 0.33 | 3.47 | 0.15 |
| 0.00 | 0.33 | 0.33 | 0.33 | 3.51 | 0.16 |
| 0.25 | 0.50 | 0.00 | 0.50 | 3.58 | 0.25 |
| 0.00 | 0.00 | 1.00 | 0.00 | 3.58 | 0.26 |
| 0.25 | 0.00 | 0.50 | 0.50 | 3.61 | 0.25 |
| 0.00 | 0.00 | 0.50 | 0.50 | 3.69 | 0.24 |
| 0.25 | 1.00 | 0.00 | 0.00 | 3.87 | 0.33 |
| 0.00 | 0.50 | 0.00 | 0.50 | 3.90 | 0.24 |
| 0.25 | 0.00 | 0.00 | 1.00 | 4.15 | 0.33 |
| 0.00 | 0.00 | 0.00 | 1.00 | 4.43 | 0.33 |
| 0.00 | 0.00 | 0.00 | 0.00 | 4.75 | 0.22 |

**Table 8 - Effect on b * of different compounds on old beef muscle mixed with pork fat at high oxygen**

| Citrate | Succinate | Pyruvate | Glutamate/Malate | b* | std. dev |
|---|---|---|---|---|---|
| | | | | | |
| 0.00 | 0.62 | 0.38 | 0.00 | 3.56 | 0.25 |
| 0.00 | 0.50 | 0.50 | 0.00 | 3.58 | 0.25 |
| 0.00 | 0.33 | 0.33 | 0.33 | 3.76 | 0.16 |
| 0.00 | 1.00 | 0.00 | 0.00 | 3.77 | 0.33 |
| 0.25 | 0.54 | 0.00 | 0.46 | 3.80 | 0.25 |
| 0.25 | 0.50 | 0.00 | 0.50 | 3.81 | 0.25 |
| 0.25 | 0.33 | 0.33 | 0.33 | 3.82 | 0.15 |
| 0.25 | 0.00 | 1.00 | 0.00 | 3.90 | 0.33 |
| 0.00 | 0.00 | 0.50 | 0.50 | 3.90 | 0.25 |
| 0.25 | 0.50 | 0.50 | 0.00 | 3.91 | 0.25 |
| 0.25 | 0.00 | 0.50 | 0.50 | 3.97 | 0.25 |
| 0.00 | 0.50 | 0.00 | 0.50 | 4.02 | 0.25 |
| 0.00 | 0.00 | 1.00 | 0.00 | 4.08 | 0.33 |
| 0.25 | 1.00 | 0.00 | 0.00 | 4.18 | 0.33 |
| 0.25 | 0.00 | 0.00 | 1.00 | 4.29 | 0.33 |
| 0.00 | 0.00 | 0.00 | 1.00 | 4.35 | 0.33 |
| 0.00 | 0.00 | 0.00 | 0.00 | 4.41 | 0.15 |

The above data show the effect of different compounds on the colouration of meat following storage. The lower b^{*} values are indicative of a better colour stability and a lower degree of oxidation of the meat. The samples stored in MAP have lower overall b^{*} values because the oxidation taking place is predominantly through chemical oxidation by compounds other than oxygen and by anaerobic processes, e.g. mediated by bacteria. In contrast, the samples stored under a high oxygen environment are oxidised to a much greater degree, as indicated by the overall increase in b^{*} value.

The above results show the surprising and significant effects of mixtures of compounds on the colour stability of the samples.

### Example 2 - Statistical analysis of the results

### Analysis and statistical methods

The data from the experiment described in Example 1 were analyzed using an ANOVA model with all main effect and second and higher order effects according to the method described in Langsrud, ø. ("50-50 Multivariate Analysis of Variance for Collinear Responses" The Statistician (2002) 51, pp. 305-317). The analysis was performed as an experiment that was factorial in oxygen concentration, age (two groups), fatty acid composition (degree of unsaturation, i.e. two levels), and mixture of components (pyruvate, glutamate/malate and succinate, citrate - at two levels - and a mixture of glutamate/malate). The mixture design was fractional.

### Response surface

Data relating to varying amounts of certain test compounds and the effects on colour parameters (in this case, a^{*}) was analysed as described above. A low a^{*} is taken to indicate brown meat and a high a^{*} to indicate red meat.

Data relating to the response surface shown in Figure 1 was generated from the following Table:

**Table 9 - The effect on a* of varying the relative amounts of succinate, pyruvate and (glutamate- + malate)**

| succinate | pyruvate | glutamate + malate | a* | std. dev. |
|---|---|---|---|---|
| | | | | |
| 1.00 | 0.00 | 0.00 | 9.81 | 0.22 |
| 0.00 | 1.00 | 0.00 | 5.76 | 0.20 |
| 0.00 | 0.00 | 1.00 | 9.14 | 0.21 |
| 0.50 | 0.50 | 0.00 | 8.89 | 0.19 |
| 0.50 | 0.00 | 0.50 | 10.18 | 0.23 |
| 0.00 | 0.50 | 0.50 | 5.88 | 0.23 |
| 0.33 | 0.33 | 0.33 | 8.34 | 0.11 |

The response surface shown in Figure 1 illustrates the change in a^{*} when the relative amounts of succinate, pyruvate and glutamate+malate were varied in the low-oxygen environment (at zero citrate concentration). The box on the figure shows the part at which the a^{*} value is the highest, i.e. at low pyruvate concentration, high succinate concentration and intermediate glutamate + malate concentration.

These data indicate that succinate alone is not the best composition to treat meat for colour stability. Rather, a mixture with components having a particular ratio gives the optimal results.

### The effect of additives on the degree of variance

A further analysis was performed to determine the percentage effect on the variance of all three colour parameters for the various additives over time. Figures 2 and 3 show the effect of the mixture of active components (including citrate) on the variance. Figure 2 shows the results for the MAP (low oxygen) samples and Figure 3 shows the high-oxygen atmosphere results. Figure 4 shows the effect of citrate alone on the variance in the high-oxygen environment.

The results shown in Figure 2 indicate that the additives have dominant effects up to 6 days after treatment. Thereafter, bacteria start to have some influence, culminating in the results observed at 13 days, where the influence of the additives is reduced. The results shown in Figure 3 indicate that the more significant effects at high oxygen are due to aerobic bacteria that spoil food (the meat is red from the beginning in the high-oxygen atmosphere and the intended function of the additives is to keep the meat in a red or purple state and to prevent a brown colour from developing). Figure 4 shows that the long-term effect of citrate is particularly pronounced in the high oxygen environment.

### Example 3 - Preparation of compositions

A liquid composition for application to meat under a low-oxygen atmosphere is prepared by mixing 1.5 parts succinate, 0.5 parts malate; 1 part glutamate and 0.5 parts citrate with water and stirring until dissolved. The pH is adjusted to 5.8 using 1M HCl or NaOH.

A solid composition for application to meat under a high-oxygen atmosphere is prepared by mixing 5 parts succinate, 2 parts citrate, 1 part glutamate and 0.5 parts pyruvate with water and stirring until dissolved. The pH is adjusted to 5.8 using 1M HCl or NaOH and then the solvent is removed, by atomisation into a hot gas using conventional spray drying equipment. The solid composition is a free-flowing powder.

### Example 4 - Treatment of meat with active agents

An experiment is performed wherein brines are prepared and mixed with meat according to the method of Example 1, except that the amounts of active agent (citrate, succinate, glutamate, malate and pyruvate) are mixed by weight percent using the values shown in tables 1 to 8. Thus, a value of 1 in Tables 1 to 8 corresponds to 1% of active agent in the brine/meat mixture, i.e. to 4g of active agent in the 40g of brine used, a value of 0.5 corresponds to 2g of active agent, etc.

The results of treating meat with the above compositions are expected to be substantially similar to those set out in Table 9, e.g. showing that the optimal results for treating meat to be stored under low-oxygen conditions are obtained at low pyruvate concentration, high succinate concentration and intermediate glutamate + malate concentrations.

### Example 5 - Colour detection in treated meat

### Aim

The aim of this study was to investigate the effect on colour of ground beef after treatment with succinate, glutamate, malate, pyruvate and citrate in the presence or absence of oxygen. Colour was measured as L^{*}, a^{*}, b^{*} values and the myoglobin states determined.

### Materials and methods

The following chemicals were purchased from Alfa Aesar GmbH & Co KG (Karlsruhe, Germany): Sodium salts of succinate hexa-hydrate, succinic acid, and pyruvic acid. These chemicals were purchased from Sigma-Aldrich Chemie GmbH (Steinheim, Germany): Sodium salts of pyruvate, glutamic acid, malic acid and DL-malic acid disodium salts. Sodium salts of hydrogen glutamate monohydrate were purchased from VWR International BVBA (Leuven, Belgium). Sodium salts of citric acid monohydrate and trisodium citrate were purchased from Merck KGaA (Darmstadt, Germany). All chemicals were of analytical grade.

*Beef M. semimembranosus* (M.S.) and beef fat tissue were collected four days *post mortem* (Fatland A/S, Oslo, Norway). The packaging day is defined as day zero, however, the tissues were 4 days *post mortem* on packing day. A piece of meat from proximal end was cut from each muscle in order to measure oxygen consumption, pH and surface colour. Fat tissue from pigs fed rapeseed and vitamin E to enhance the content of polyunsaturated fatty acids were from HKScan (Ruokatalo, Finland). The fat tissue was transported vacuum-packaged and frozen. Samples of minced fat tissue were removed for fatty acid analysis.

The beef muscles were cut into pieces of approximately 10x5 cm and mixed to 14% w/w fat by using the fat tissues. Beef fat and pork fat tissues were ground twice with either raw beef from four young (16-19 months) or four old (46-81 months) cattle. The meat had pH of 5.65 and was ground with a Seydelmann ME-130 (Seydelmann, Stuttgart, Germany) grinder through a plate with 3 mm openings. The ground meat was blended manually with solutions (all at pH 5.8) with various TCA and glycolytic ingredients (see below).

The experiment was designed using four combinations of raw materials: young beef and bovine fat (experiment 1); young beef and pork fat (experiment 2); old beef and bovine fat (experiment 3); old beef and pork fat (experiment 4).

Solutions were prepared using succinate, pyruvate, glutamate, malate and citrate in different combinations, either as the pure sodium-based/acid based chemicals or as mixtures of 2, 3, 4 and 5 chemicals of varying concentrations. To maintain pH at 5.8 the solutions were prepared by mixing the acid form and the corresponding sodium salt of these chemicals.

40 g of 0.1 M or 0.05 M solutions were added to ground beef-fat mixture (360g) to a total weight of 400g. The solution was quickly and properly stirred into the minced meat and the blended system was subsequently packaged. The final diluted concentration was either 0.1 or 0.05 mol/kg. Two reference samples with 40 ml of distilled water added to 360 gram of ground beef were also prepared each of the four production day, i.e. altogether 8 references were prepared. The samples were packaged in either low or high oxygen atmosphere.

The ground beef was packaged in black amorphous polyethylene terephthalate (APET) trays that were sealed with ethylene vinyl alcohol (EVOH) top films. The trays and films (Wipak Multipet and Wipak Biaxer, both Wipak, Nastola, Finland) had oxygen transmission rates of 7 and 5 cm³/m²/24 h at 23 °C at 50 % relative humidity. Packaging was carried out within 1 hour after grinding. The samples were stored in darkness at 4°C for 8 days in a high-oxygen atmosphere (75% oxygen and 25% CO₂) and for 13 days in a low-oxygen atmosphere (60% CO₂ and 40% N₂). These food grade gas mixtures were supplied by AGA (Oslo, Norway).

A tray sealing machine was used for the packaging (Promens 511VG, Kristiansand, Norway). Measurements of the CO₂ and O₂ contents were carried out with a CheckMate 9900 (PBI Dansensor, Ringsted, Denmark) by inserting a needle through self-adhesive and self-sealing rubber septas (Toray TO 125, Toray Engineering, Osaka, Japan). Gas measurements were performed at days 0 (packaging day) and 13 for low oxygen packages and days 0, 1,3,6 and 8 for high oxygen packages. The gas to meat ratio was approximately 2:1.

The fatty acid composition of the selected fat tissues was determined as methyl esters, analyzed by GC-MS (7890A GC, Agilent Technologies, Palo Alto, USA). Transesterification of lipids to fatty acid methyl esters (FAME) were performed, as described by Devle et al. (J Sep Sci (2009) 32(21):3738-3745) with minor modifications. Briefly 0.01 g fat was dissolved in 2.0 ml hexane and added 1.5 ml of 3.33 mg/ml sodium methanolate solution, placed on a shaker for 30 min, before the samples were left to settle for 10 min. Two hundred µl of the top layer were transferred to a new vial. Fatty acid analysis was performed by autoinjection of 1 µL of each sample at a split ratio of 80/1, constant flow mode, velocity 20.4 cm/sec. The data were collected as area percentages. Two replicates were taken.

To identify FAMEs, their retention times were compared to those of a known 37-component standard FAME mix, and the mass spectra were compared with spectra available from the NIST (National Institute of Standards and Technology) database.

Measurements of oxygen consumption rates were carried out at pH 7.1 on permeabilized muscle fibres. The fibres were removed from the meat and were 3-5 mm in length. Oxygen consumption rate (OCR) measurements were done at day 0 (i.e. four days *post mortem)* and on the last day of the experiment. Chemicals were always added in the following sequence and the final concentrations were 4.0 mM malate, 5.0 mM pyruvate, 10.0 mM glutamate, 1.25 mM ADP, 0.50 mM octanoylcarnitine, 5.0 mM succinate, 0.5-1.5 µM carbonyl cyanide-p-triflouromethoxy-phenylhydrazone (FCCP), 2.5 µM rotenone, 5.0 mM malonic acid and 2.5 µM antimycin A. High-resolution respirometry was carried out with Oroboros Oxygraph-2K instruments (Oroboros Instruments, Innsbruck, Austria) as described by Gnaiger (Respir Physiol. (2001) 128(J):277-97). Background oxygen consumption after antimycin A inhibition (Gnaiger, E. (2008) "Polarographic oxygen sensors, the oxygraph, and high-resolution respirometry to assess mitochondrial function" In J. Dykens & Y. Will (Eds.), Drug-Induced Mitochondrial Dysfunction (pp. 327-352). Innsbruck: John Wiley & Sons, Inc.) was recognized as residual oxygen consuming side reactions (ROX).

Four measurements were made on each batch. One measurement on the packaging day failed, however, and was linearly extrapolated back to zero time from consecutive measurements. Complex I activity was calculated as the summation of responses elicited by the corresponding substrates (glutamate, malate and pyruvate). Complex II activity was measured as the response toward succinate. Inhibition of the ETS was carried out in sequence and started with rotenone (inhibition of complex I), malonic acid (inhibition of complex II) and antimycin A (inhibition of complex III).

The colour of the ground meat samples was measured with a Konica Minolta Chroma Meter CR 410 (Konica Minolta Sensing Inc., Osaka, Japan) using the glass light projection tube CR A 33e with wide illumination area (61mm) and illuminant D65. The instrument was calibrated each day by measuring a white ceramic plate (L*= 97.9; a*=0.05; b*=2). All colour measurements were made with 3 replicates (CIE, 1976, "Recommendations on uniform colour spaces-colour difference equations" (Vol. Supplement No. 2 to CIE). Paris, France: Commission Internationale de l'Eclairage).

Samples were scanned, 400 - 100 nm, with a Foss NIRSystems OptiProbe™ 6500 Analyzer (Foss NIRSystems Inc., Maryland, USA) without opening of the package. The package was turned upside-down before measurements so that the meat would fall on the packaging film. The samples were scanned with three random placements of the probe on the package surface in order to increase the scanning area and reduce the measurement errors. Thirty -two scans for both reference and samples were acquired and averaged on each measured area. All measurements were performed at room temperature (approx. 20 °C) according to Khatri, et al. (Meat Sci. (2012) 91(3): 223-231). These spectra were used to predict OMb, MMb and DMb levels. Calibration was performed using comminuted meat with 10 % w/w added water.

The colour of the samples packaged in high O₂ was measured after 0, 1, 3, 6 and 8, days of storage from packaging day, while low O₂ samples were measured at 0 to 13 days of storage using Minolta and reflectance measurements.

Slices of ground beef were excised in frozen state and thawed in 40 mM pH 6.8 sodium phosphate buffer with a weight to volume (gram to millilitre) ratio of 1:10 and mixed using a food processor (HR 1364 600W, Philips, Netherland). After centrifugation the supernatant was measured (440 - 650 nm) with a Shimadzu UV-1800 spectrophotometer (Shimadzu Europa GmbH, Duisburg, Germany). The total myoglobin concentration was calculated according to Faustman and Phillips ("Measurement of discoloration in fresh meat", Current protocols in food analytical chemistry: John Wiley & Sons, Inc., 2001).

### Experimental design and statistical analysis

The experimental design is visualized in Figure 5. A 2² design (animal age and type of fat tissue) was split over 4 experimental days (Figure 5, and Tables 10 and 11). To each corner of this 2² design was added a 3 component (succinate, pyruvate and glutamate-malate additions; 0, 50 and 100 %) simplex lattice mixture design with 2 additional centre experiments as shown in Figure 5. Each of these eight experimental points had 4-factors (glutamate-malate ratio, total added mixture levels, citrate concentrations, oxygen concentrations) at 2-levels, i.e. a 2⁴ design. It will be realized below that despite oxygen being a design variable when the experiment was planned, the nature of the data required the observations to be split into low and high oxygen for modeling.

**Table 10 - The 8-point simplex centroid mixtures design (Figures 5) with the respective chemicals and mixture at each experimental point**

| Experimental point | Succinate (percentage) | Pyruvate (percentage) | Glutamate-malate (percentage) |
|---|---|---|---|
| | | | |
| 1 | 100 | 0 | 0 |
| 2 | 0 | 100 | 0 |
| 3 | 0 | 0 | 100 |
| 4 | 0 | 50 | 50 |
| 5 | 50 | 0 | 50 |
| 6 | 50 | 50 | 0 |
| 7 | 33 | 33 | 33 |
| 8 | 33 | 33 | 33 |

**Table 11 - The 2⁶ design with the respective chemicals and levels**

| Effect | Level 1 | Level 2 |
|---|---|---|
| | | |
| Mixture comp.(mol/kg) | 0.05 | 0.1 |
| Citrate (mol/kg) | 0 | 0.025 |
| Glutamate-malate level | 25:75 | 75:25 |
| Fat type | Pork | Beef |
| Age | Young | Old |
| Oxygen (% v/v) | ~0 | 75 |

The eight experimental points of the mixture design were, upon fractionation of the design (see below), then considered to be the corners of a cube. To do this, the 8-point mixture design was recorded as a 2³ experiment by introducing the three fictitious mixture variables as factorial design variables.

The design was regarded as a 2⁹ design (512 samples). In order to increase the feasibility of the design, a quarter fraction of the 2⁹ design with 128 experiments (32 each day, 4 days total) was constructed by utilizing the theory of fractional factorial for two-level designs. The actual design was chosen from standard designs by considering three aspects; 1) an optimal confounding pattern for the fictitious mixture variables, 2) Good individual designs at each single day, 3) alternative models based on the original variables should behave well according to classical optimal design criteria (D-optimality). To optimize confounding the mixture points differed for each quarter fraction. The 128 samples represented a balanced design. However, 7 extra samples were added every day. Four replicates (comers and center) were distributed manually in a way that minimized the imbalance caused by adding such replicates. Finally, 3 corner samples consisting of minces with additions of pure glutamate, pure malate or pure citrate solutions were prepared. In addition 2 samples were produced only with water added after each day.

The statistical analysis was performed according to the approach described by Langsrud et al. (J. Appl. Statist. (2007) 34:1275-1296) and implemented in the 50-50 MANOVA software (http://www.langsrud.com/stat/program.htm) This program handles mixture designs as generalized categorical variables (generalized ANOVA). When using this method one can always formulate equivalent models that use the individual mixture variables as ordinary (one degree of freedom) regression variables. Then one arbitrary mixture variable has to be omitted (slack variable). Important outputs from the analysis are significance results (p-values), explained variances (based on sums of squares) and adjusted mean values (or mean predictions). Adjusted mean values can be calculated over the whole mixture region and the result can be presented as surfaces.

The analysis was based on a model (responses were: a*, b*, myoglobin states) that included the terms given in Table 12. Where "mixture" was the linear effect of the 3-component mixture design in the variables succinate, pyruvate and glutamate-malate, "mixture 2" was the quadratic effect of the 3-component mixture design, "mixture x age" was the second order interaction term between the 3-component mixture design and age and so on (Table 12). This relatively complicated model was chosen to ensure that the model is useful for all response variables. Since there were as many as 40 degrees of freedom for error and since the analysis were based on a hierarchical approach further model reduction was not needed.

**Table 12 - The model terms used for analyzing the design described in Figure 5. Two separate models were constructed for high and low oxygen**

| First order terms | | Second order terms | | Third order terms | |
|---|---|---|---|---|---|
| Effect | DF | Effect | DF | Effect | DF |
| | | | | | |
| Fat type | 1 | Mixture comp×Fat type | 2 | Mixture comp×Age×Fat type | 2 |
| Age | 1 | Mixture comp×Age | 2 | Mixture comp×Fat type×Citrate | 2 |
| Citrate | 1 | Mixture comp×Citrate | 2 | Age×Fat type×Citrate | 2 |
| Total mixture comp | 1 | Age×Fat type | 1 | Total mixture comp×ratio malate/glutamate | 1 |
| Ratio malate/glutamate | 1 | Age×Citrate | 1 | Mixture comp×Age×Fa type | 2 |
| Mixture comp | 2 | Fat type×Citrate | 1 | Mixture comp×Mixture comp*Citrate | 3 |
| | | Mixture comp× Mixture comp | 3 | | |

| | | | | | |
|---|---|---|---|---|---|
| DF: degrees of freedom | | | | | |

### Results - Fatty acid composition offat tissue

*M. semimembranosus* from old (46-81 months) animals had nominally 29% more myoglobin than the young (16-19 months) animals. The difference was, however, not statistically significant since the two muscles from the young group differed greatly. The fatty acid composition of beef and pork fat tissue differed (Table 13). Porcine fat tissue contained 10 times more polyunsaturated fatty acids (PUFA) plus more monounsaturated fatty acids (MUFA) than the beef fat tissue, which in turn was richer in saturated fatty acids (SFA) (Table 13).

**Table 13 - Fatty acid compositions in pork and beef fat**

| | SFA % | MUFA % | PUFA % |
|---|---|---|---|
| | | | |
| Pork fat (1)* | 26.6±0.2 | 50.0±0.0 | 22.0±0.1 |
| Beef fat (2)* | 48.6±3.1 | 42.8±1.8 | 2.0±0.4 |

| | | | |
|---|---|---|---|
| *Remaining fatty acids were not identified. SFA; saturated fatty acid, MUFA; monounsaturated fatty acid, PUFA; polyunsaturated fatty acid. | | | |

### Results - Oxygen consumption rate (OCR) of the muscle used

As shown in Table 14 the mitochondrial substrates that stimulated complex I, were glutamate, malate and pyruvate. Oxidation of succinate led to stimulation of complex II via production of FADH₂. (β-oxidation of octanoylcarnitine produced reducing equivalents that stimulated both complexes I and II. Complex I was subsequently inactivated by rotenone, and complex II by malonic acid. Complete inhibition of oxygen consumption by the ETS was achieved using antimycin A to inactivate complex III, with ROX remaining as the sole oxygen consuming reaction at this point. For all muscle systems, the mitochondrial respiration (measured as oxygen consumption rate) in the presence of succinate (complex II) had higher activity than respiration in the presence of glutamate-malate (complex I, Table 14). For young animals the response to β-oxidation (octanoylcarnitine) was 60-67 % of the response of complex II response while the response to β-oxidation for old animals was only 10-21 % of the response, to complex II (Table 14). These differences were significant (p<0.003). The muscle raw material showed the expected dominant activity of complex II. The mean (both ages averaged) nominal reduction for complex I activity was 48 % over 13 days of chill storage. The mean, nominal reduction (both ages averaged) in β-oxidation was 58 % over the same 13 days. The mean nominal value for respiration on complex II and I was higher for young than for old animals. Large standard errors (Table 14) were obtained since the two muscles for the young animals were quite different. However, all four muscle samples showed the expected reduction in OCR with time and the larger oxygen consumption on complex II.

**Table 14 - Mean oxygen consumption from permeabilised tissue from M. semimembranosus from young and old animals before minced and mixed with fat. Four measurements were made at packing day (day 0) and 13 days later**

| | | OCR (pmol O₂/sec)/mg protein) - mean ± std. error | | | | | |
|---|---|---|---|---|---|---|---|
| Animal | Days | Complex I^{a} | β-oxidn. | Complex II (unc.)^{b} | Inhib. I^{c} | Inhib. II^{d} | ROX^{e} |
| | | | | | | | |
| Young | 0 | 9.0±5.2 | 13.8±4.8 | 20.9±6.1 | 19.2±5.7 | 2.8±1.4 | 11.3±2.6 |
| | 13 | 7.0±2.7 | 8.0±3.3 | 13.5±5.3 | 11.2±3.8 | 0.3±0.1 | 4.3±1.2 |
| | | | | | | | |
| Old | 0 | 6.2±1.0 | 3.5±0.4 | 16.7±3.5 | 15.2±4.7 | 0.5±0.6 | 10.3±0.2 |
| | 13 | 0.9±0.5 | 0.9±0.5 | 8.6±1.6 | 8.6±0.9 | -0.7±0.1 | 10.3±1.1 |

| | | | | | | | |
|---|---|---|---|---|---|---|---|
| ^{a} Complex I response was after stimulation by glutamate-malate and pyruvate. ^{b} Complex II response was in sequence after complex I and initiated by succinate and uncoupled by FCCP. ADP was present after Complex I stimulation. ^{c} Inhib. I: complex I inhibited by rotenone, ^{d} Inhib. II: complex II inhibited by malonic acid, ^{e} ROX: oxygen consuming side reaction after complete inhibition of ETS with antimycin A. | | | | | | | |

### Results - Mean change in L*, a*, and b* with time

The overall redness (a*) in ground beef changed the most during the experiments and high oxygen packaging yielded more redness than low oxygen packaging (Figure 6A and B). However, a^{*} values in high oxygen was unstable and decreased steadily from start (Figure 6B) while the redness in low oxygen packaging had an increase from day 1 until day 6 and stabilized at a plateau (Figure 6A). Moreover, the ground beef was most yellow (b*) when packaged in high compared to low oxygen (Figure 6A and B). Surface darkening occurred due to oxidation of myoglobin and occurred faster in high than in low oxygen packaging (Figure 6A and B).

Figure 6 shows a breakpoint on L^{*} at day 6 and day 3 for low and high oxygen packaging, respectively. At these breakpoints smell was detected due to bacterial growth (not shown), which occurs earlier in high than in low oxygen packaging. Furthermore, according to oxygen concentration measurements there was a sharp drop at day 6 in high oxygen packages supporting the notion of bacterial growth (results not shown).

### Results - Changes in a* and b* promoted by the mixture

The design variable mix containing succinate, pyruvate and/or glutamate-malate, influenced colour variable a* the most (explained variance = 54.1% in low oxygen) at day 3. The response surface to different combinations of succinate, pyruvate and glutamate-malate can be seen at each respective corner in Figure 7. As L^{*} values did not change much and had little influence on colour (Fig. 6), a* and b* changes were the focus when packaged in low (Fig. 7A and C) and high oxygen (Fig. 7B and D). Pyruvate did not improve redness (a*) at any packaging condition (Fig. 7A and B). Moreover, pyruvate even seemed to decrease a* and increase b* values in low oxygen packages (Fig. 7A and C). The response surface in low oxygen packaging at day 3 shows succinate with glutamate-malate to have the highest a* values while pyruvate had a negative effect on a* (Fig. 7A). Pyruvate promoted increased yellowness (increasing b*) and had the opposite effect to succinate (Fig. 7C). It was apparent that high oxygen lead to both high a* and b* values for glutamate-malate (Fig. 7B and D). The direction of a^{*} changed when the meat was packaged under high oxygen and revealed a gradual shift from high a^{*} values with glutamate-malate and pyruvate at day 0 to glutamate-malate and succinate at day 8 (results not shown). In high oxygen packaging high b^{*} values was largely located at the glutamate-malate corner throughout the experiment (Fig. 7D).

Actual concentration of the chemical mixture (any composition) was not significant for maintaining colour (p>0.05). However, glutamate lead to nominally higher a^{*} values and malate to nominally higher b^{*} values when the meat was packaged in low oxygen (not shown).

### Results - Mean change in myoglobin states with time

The change in the average percentage distribution of the different states of myoglobin with time in low and high oxygen atmosphere is shown in Figure 8A and B, respectively. The prevalence of OMb (oxymyoglobin) and MMb (metmyoglobin) decreased over time in low oxygen packaging; OMb became nearly depleted at day 6 (Fig. 8A). There was a peak in MMb at day 1 (in agreement with a*, Fig. 7A), indicating that myoglobin converted from OMb to MMb to DMb (deoxymyoglobin). There were little change after day 6, indicating that the oxygen in the packages became quickly depleted within the first 5-6 days (Fig. 8A). The prevalence of DMb had the opposite trend to MMb and OMb and increased from start until day 10 when it leveled off (Fig. 8A). On the other hand, under high oxygen environment there were almost no DMb accumulation (<2%, Fig. 8B). OMb was high, but decreased throughout the experimental time with a concomitant increase of MMb (Fig. 8B), indicating a direct turnover from ferrous myoglobin with bound oxygen to ferric myoglobin or that a transition through DMb was not rate limiting. More importantly, it was observed that the prevalence of MMb increased together with a decreasing OMb when packaged in high oxygen (Fig. 8B), but the MMb content did not increase in low oxygen packages (Fig. 8A).

### Results - Changes in DMb, OMb and MMb promoted by the mixture

The combination of succinate and glutamate-malate was largely responsible for accumulation of DMB in low oxygen packaging (Fig. 9A). The response surface to DMb, OMb and MMb did not change slope throughout the experimental time of 13 days (not shown) in low oxygen. Moreover, pyruvate increased OMb and MMb formation (Fig. 9C and E). Under high oxygen conditions, DMb generation was strongly supported by succinate plus a smaller concentration of pyruvate (Fig. 9B). Glutamate-malate favored OMb formation, while pyruvate favored MMb in high oxygen (Fig. 9D and F). The ability of glutamate-malate to maintain OMb changed little with time (results not shown). At day 3 (and later days) pyruvate was a colour destabilizer under high oxygen conditions (Fig. 9F).

### Results - The effect offactorial (2-level) design variables on colour.

Adjusted mean effects of age, animal fat, citrate and oxygen on L^{*}, a^{*} and b* are shown in Table 15, where age (after the mix factor) had the largest effect on L* values at all time measurements in both low and high oxygen packaging. Young animals had the highest L*, a* and b* at all times at both oxygen concentrations (Tables 15-16). Fat tissue from pigs resulted in larger L* and a* than beef fat at almost all time points at both oxygen concentrations. The effect of citrate was small but differed between packaging in low and high oxygen. Most important was the development of colour after day 1 where a* started to increase until day 8 and stabilized in low oxygen packaging (Table 15).

The effect of age on myoglobin state was not significant (P>0.05), except for day 1 where young animals had the highest prevalence of MMb and old animals had most DMb (Tables 17 and 18). In low oxygen packaging, young animals promoted the prevalence of MMb (Table 17). Porcine fat gave the highest prevalence of DMb in all measurements and bovine fat the highest of OMb in low oxygen measurements (Table 17). Furthermore, bovine fat had the highest number of MMb from day 8 to 10 in low oxygen while porcine fat was shown to be involved in MMb generation in high oxygen at day 6 and 8, presumably due to fatty acid oxidation (Table 18).

Addition of citrate in low oxygen packaging increased OMb and MMb while the DMb was reduced. The MMb content was at its highest at day 1 (citrate added; Table 17). Under high oxygen conditions, citrate led to nominal higher values for OMb (and nominally lower values for MMb), but the effect was not significant (Table 18).

**Table 15 - Adjusted (according to model in Table 12) means with standard errors at high and low levels of age, fat and citrate on the development of L*, a* and b* values with storage time under low oxygen conditions**

| **Effect** | **Type** | **Variable** | **Day 1** | **Day 3** | **Day 6** | **Day 8** | **Day 10** | **Day 13** |
|---|---|---|---|---|---|---|---|---|
| **Age** | Young | L* | 34.2±0.1 | 34.0±0.1 | 33.9±0.1 | 33.8±0.1 | 33.8±0.1 | 34.0±0.1 |
| | | a* | 7.4±0.1 | 8.0±0.1 | 8.5±0.1 | 8.5±0.1 | 8.6±0.1 | 8.4±0.2 |
| | | b* | 2.7±0.1 | 2.5±0.1 | 2.3±0.0 | 2.3±0.0 | 2.4±0.0 | 2.4±0.1 |
| | Old | L* | 33.1±0.1 | 32.7±0.1 | 32.8±0.1 | 33.0±0.1 | 33.2±0.1 | 32.9±0.1 |
| | | a* | 6.1±0.1 | 6.8±0.1 | 7.3±0.t | 7.4±0.1 | 7.4±0.1 | 7.5±0.2 |
| | | b* | 2.1±0.1 | 2.0±0.1 | 2.0±0.0 | 1.9±0.0 | 1.9±0.0 | 1.9±0.1 |
| **Fat** | Pork | L* | 34.1±0.1 | 33.9±0.1 | 33.9±0.1 | 33.8±0.1 | 33.9±0.1 | 33.7±0.1 |
| | | a* | 7.1±0.1 | 7.7±0.1 | 8.8±0.1 | 8.3±0.1 | 8.3±0.1 | 8.2±0.1 |
| | | b* | 2.4±0.1* | 2.3±0.1* | 2.2±0.0* | 2.2±0.0* | 2.2±0.0* | 2.3±0.1 |
| | Cattle | L* | 33.2±0.1 | 32.8±0.1 | 32.8±0.1 | 33.1±0.1 | 33.1±0.1 | 33.1±0.1 |
| | | a* | 6.4±0.1 | 7.17±0.1 | 7.6±0.1 | 7.5±0.1 | 7.6±0.1 | 7.7:1±0.2 |
| | | b* | 2.4±0.1* | 2.3±0.1* | 2.1±0.0* | 2.1±0.0* | 2.1±0.0* | 2.0±0.1 |
| **Citrate** | Low | L* | 33.8±0.3 | 33.71±0.3 | 33.4±0.2* | 33.5±0.2* | 33.6±0.2* | 33.6±0.3* |
| | | a* | 6.9±0.3* | 7.7±0.2 | 8.2±0.2 | 8.3:1±0.2 | 8.3t0.2 | 8.3±0.3 |
| | | b* | 2.5±3 | 2.3±0.1* | 2.2±0.1* | 2.2±0.1* | 2.2±0.1 | 2.2±0.2* |
| | High | L* | 33.5±0.3 | 33.0±0.3 | 33.3±0.2* | 33.4±0.2* | 33.4±0.2* | 33.2±0.3* |
| | | a* | 6.6±+.3* | 7.1±0.2 | 7.5±0.2 | 7.5±0.2 | 7.6±0.2 | 7.6±0.4 |
| | | b* | 2.3±0.2 | 2.3±0.1* | 2.2±0.1* | 2.1±0.1* | 2.1±0.1 | 2.1±0.2* |

| | | | | | | | | |
|---|---|---|---|---|---|---|---|---|
| * The difference between high and low level of effects at specified times was not significant (P>0.05) | | | | | | | | |

**Table 16 - Adjusted (according to model in Table 12) means with standard errors at high and low levels of age, fat and citrate on the development of L*, a* and b* values with storage time under high oxygen conditions.**

| **Effect** | **Type** | **Variable** | **Day 1** | **Day 3** | **Day 6** | **Day 8** |
|---|---|---|---|---|---|---|
| **Age** | Young | L* | 35.0±0.1 | 34.7±0.1 | 34.7±0.1 | 34.6±0.1 |
| | | a* | 13.6±0.1 | 12.4±0.1 | 11.1±0.1 | 10.3±0.1 |
| | | b* | 5.1±0.1 | 4.8±0.1 | 4.5±0.1 | 4.3±0.0 |
| | Old | L* | 33.8±0.1 | 32.8±0.1 | 33.3±0.1 | 33.6±0.1 |
| | | a* | 12.4±0.1 | 12.1±0.1 | 10.5±0.1 | 9.5±0.1 |
| | | b* | 0.1±0.1 | 0.1±0.1 | 0.06±0.1 | 0.0±0.0 |
| **Fat** | Pork | L* | 34.4±0.1* | 34.4±0.1 | 34.4±0.1 | 34.4±0.1 |
| | | a* | 13.2±0.1 | 12.2±0.1* | 11.0±0.1 | 10.0±0.1* |
| | | b* | 4.7±0.1 | 4.5±0.1* | 4.3±0.1 | 4.1±0.0 |
| | Cattle | L* | 34.4±0.1* | 33.1t0.1 | 333.7±0.1 | 33.9±0.1 |
| | | a* | 12.8±0.1 | 12.3±0.1* | 10.6±0.1 | 9.8±0.1* |
| | | b* | 4.4±0.1 | 4.4f0.1* | 4.0±0.1 | 3.8±0.0 |
| **Citrate** | Low | L* | 34.5±0.2 | 33.9±0.3* | 34.8±0.3 | 34.3±0.2 |
| | | a* | 13.0±0.2* | 12.17±0.2* | 10.6±0.2 | 9.6±0.2 |
| | | b* | 4.6±0.1* | 4.5±0.1* | 4.20±0.2* | 4.0±0.1* |
| | High | L* | 34.2±0.3 | 33.6±0.3* | 33.8±0.3 | 33.9±0.3 |
| | | a* | 13.0±0.2* | 12.3±0.2* | 11.0±0.3 | 10.3±0.2 |
| | | b* | 4.5±0.1* | 4.4±0.1 * | 4.1±0.2* | 4.0±0.1 * |

The difference between high and low level of effects at specified times was not significant (P>0.05)

**Table 17 - Adjusted (according to model in Table 12) means with standard errors at high and low levels of age, fat and citrate on the development of DMb, OMb, and MMb percentages (normalized data) with storage time at low oxygen, concentration. Values are in % and not normalized.**

| **Effect** | **Type** | **Mode** | **Day 1** | **Day 3** | **Day 6** | **Day 8** | **Day 10** | **Day 13** |
|---|---|---|---|---|---|---|---|---|
| **Age** | Young | DMb | 40.6±3.2 | 60.2±3.3* | 71.8±3.1* | 72.1±3.2* | 73.9±3.1* | 70.8±4.1* |
| | | OMb | 8.3±0.4 | 4.7±0.4* | 2.8±0.4* | 2.7±0.4 | 3.2±0.3* | 3.8±0.5 |
| | | MMb | 51.2±2.9 | 35.1±3.0* | 25.4±2.9* | 25.3±2.8* | 23.0±2.8* | 25.4±3.7* |
| | Old | DMb | 49.3±3.2 | 60.2±*3.3 | 68.9±3.1* | 71.0±3.2* | 74.5±3.1* | 78.1±4.1* |
| | | OMb | 6.5±0.4 | 4.4±0.4* | 3.2±0.4* | 3.6±0.4 | 2.7+0.3* | 2.5±0.5 |
| | | MMb | 44.3±2.9 | 35.3±3.0* | 27.9±2.9* | 25.4±2.8* | 22.8±2.8* | 19.4±3.7* |
| **Fat** | Pork | DMb | 48.9±3.2* | 65.8±3.2 | 74.7±3.0 | 76.7±3.1 | 79.5±3.0 | 76.0±4.0* |
| | | OMb | 6.0±0.4 | 2.6±0.4 | 1.4±0.4 | 1.9±0.4 | 1.6±0.3 | 1.9±0.5 |
| | | MMb | 45.1±2.9* | 31.6±3.0* | 24.0±2.9* | 21.4+2.8 | 18.9±2.8 | 22.1±3.7* |
| | Cattle | DMb | 40.7±3.3* | 54.1±3.3 | 65.6±3.2 | 65.8±3.2 | 68.4±3.2 | 72.9±4.2* |
| | | OMb | 8.8±0.4 | 6.7±0.4 | 4.8±0.4 | 4.6±0.4 | 4.4±0.3 | 4.4±0.5 |
| | | MMb | 50.5±3.0* | 39.2±3.1* | 29.6±2.9* | 29.6±2.9 | 27.2±2.9 | 22.7±3.8* |
| **Citrate** | Low | DMb | 47.6±3.1* | 64.6±3.2* | 75.3±3.0 | 76.0±3.1 | 78.2±3.0 | 76.5±4.0* |
| | | OMb | 7.0±*0.4 | 3.8±0.4 | 2.3±0.4 | 2.3±0.4 | 2.2±0.3 | 2.5±0.5* |
| | | MMb | 45.4±2.9* | 31.7±2.9* | 22.3±2.8 | 21.7±2.8* | 19.7±2.8* | 21.0±3.6* |
| | High | DMb | 42.1±3.3* | 55.5±3.3* | 64.9±3.1 | 66.6±3.1 | 69.9±3.0 | 72.3±4.1* |
| | | OMb | 7.8±0.4* | 5.5±0.4 | 3.7±0.4 | 4.1±0.4 | 3.8±0.3 | 3.8±0.5* |
| | | MMb | 50.2±3.0* | 39.1±3.1* | 31.4±3.0 | 29.3+2.9* | 26.3±2.9* | 23.9±3.8* |

| | | | | | | | | |
|---|---|---|---|---|---|---|---|---|
| *The difference between high and low levels of effects at specified times were not significant (P>0.05) | | | | | | | | |

**Tables 18 - Adjuster (according to model in Table 12) means with standard errors at high and low levels of age, fat and citrate on the development of DMb, OMb, and MMb percentages (normalized data) with storage time at high oxygen concentration. Values are in % and not normalized.**

| **Effect** | **Type** | **Mode** | **Day 1** | **Day 3** | **Day 6** | **Day 8** |
|---|---|---|---|---|---|---|
| **Age** | Young | DMb | 0.0±0.0 | 0.0±0.0 | 0.4±0.3 | 0.2±0.2 |
| | | OMb | 91.3±0.3 | 86.6±0.6 | 76.2±0.7* | 66.3±0.7* |
| | | MMb | 8.7±0.3 | 13.4±0.6 | 23.4±0.6* | 33.6±0.7 |
| | Old | DMb | 0.0±0.0 | 0.1±0.0 | 1.4±0.3 | 2.5±0.2 |
| | | OMb | 94.3±0.3 | 88.4±0.6 | 75.4±0.7* | 69.0±0.7* |
| | | MMb | 5.7±0.3 | 11.6±0.6 | 23.2±0.6* | 28.5±0.7 |
| **Fat** | Pork | DMb | 0.0±0.0 | 0.0±0.0* | 0.8+0.3 | 1.3±0.2 |
| | | OMb | 91.0±0.3* | 88.2±0.6 | 73.7±0.7* | 66.4±0.7 |
| | | MMb | 9.0±0.3 | 11.8±0.6* | 25.5±0.6 | 32.3±0.7 |
| | Cattle | DMb | 0.0±0.0 | 0.1±0.0* | 1.0±0.3 | 1.4±0.2 |
| | | OMb | 94.5±0.3* | 86.8±0.6 | 77.8±0.7* | 68.8±0.7 |
| | | MMb | 5.5±0.3 | 13.1±0.6* | 21.2±0.6 | 29.8±0.7 |
| **Citrate** | Low | DMb | 0.0±0.0* | 0.1±0.0 | 1.3±0.3 | 2.0±0.2 |
| | | OMb | 92.3±0.3 | 85.7±0.6 | 72.8±0.7 | 63.1±0.7 |
| | | MMb | 7.7±0.3 | 14.2±0.6 | 25.9±0.6 | 34.9±0.7 |
| | High | DMb | 0.0±0.0* | 0.0±0.0 | 0.5±0.3 | 0.6±0.2 |
| | | OMb | 93.4±0.6 | 89.5±0.6 | 79.1±0.7 | 72.7±0.8 |
| | | MMb | 6.6±0.3 | 10.5±0.6 | 20.4±0.6 | 26.7±0.7 |

| | | | | | | |
|---|---|---|---|---|---|---|
| *The difference between high and low levels of effects at specified times were not significant (P>0.05) | | | | | | |

### Results - Mixtures giving maximum and minimum in colour variables

Combinations that were found to give maximum and minimum in a* and b* values and myoglobin states for the two packaging methods are shown in Tables 19 and 20. Values are from day 3 and predictions were made on samples containing citrate and no citrate.

The max a* values (9.7±0.3) in low oxygen packaging was obtained with 41% succinate and 59% glutamate-malate (no citrate) and max b* (4.0±0.1) was obtained with 78% pyruvate and 22% glutamate-malate (Table 19 and Fig. 7).
Samples in high oxygen packaging had the highest a* and b* values with citrate and glutamate-malate of 13.3±0.2 and 4.9±0.1, respectively (Table 20 and Fig. 7B and D).

The conditions that resulted in the highest relative amount of DMb in low oxygen packaging, contained similar combinations of additives as those that yielded maximum a* values. Moreover, low oxygen packaging combinations that were shown to induce high b* values, were also promoting OMb and MMb (Table 19 and Fig. 9). Prevalence of DMb under high oxygen atmosphere was mainly influenced by succinate and to a lesser extent by glutamate-malate, corresponding to 70-80% and 20-30%, respectively (Table 20). The generation of high OMb fractions was maintained solely by glutamate-malate, regardless of citrate concentrations (Tables 19 and 20). The situation was rather different for MMb accumulation as pyruvate was shown to promote MMb in the absence of citrate, while increasing citrate lead to increased participation of succinate (Tables 19 and 20). Conversely, conditions that typically resulted in minimum a*, b* or myoglobin values, were inverse to those that yielded the maximum values.

**Table 19 - Combinations of substrates that yield the maximum (max) or minimum (min) responses with standard deviations for a*, b* and myoglobin states (not normalized). Results are shown as % of each addition of the respective chemicals (total amounts either 0.05 moll kg or 0.1 mol/kg). Predications were based on unadjusted values (Table 12) of the mixture component effect at day 3. Low oxygen packaging and low and high citrate level are shown.**

| **Variable** | **Citrate** | **Succinate** | **Pyruvate** | **Glu-Mal** | **Magnitude of variable** |
|---|---|---|---|---|---|
| **a*** | Low | 40 | 0 | 60 | 9.7±0.2^{c} |
| | High** | 60 | 0 | 40 | 9.2±02^{c} |
| | Low | 0 | 80 | 20 | 4.8±0.2^{b} |
| | High | 0 | 80 | 20 | 5.3±0.2^{b} |
| **b*** | Low | 0 | 80 | 20 | 4.0±0.1^{c} |
| | High | 0 | 80 | 20 | 3.5±0.1^{c} |
| | Low | 70 | 0 | 30 | 1.2±0_{.}1^{b} |
| | High | 50 | 0 | 50 | 1.2±0.1^{b} |
| **DMb^{a}** | Low | 50 | 0 | 50 | 105.0±9.0^{c} |
| | High | 50 | 0 | 50 | 100.0±9.0^{c} |
| | Low | 0 | 70 | 30 | -1.0±8.0^{b} |
| | High | 0 | 80 | 20 | 6.0±7.0^{b} |
| **OMb^{a}** | Low | 0 | 80 | 20 | 9.0±1.0^{c} |
| | High | 0 | 80 | 20 | 1.0±1.0^{c} |
| | Low | 40 | 0 | 60 | -2.0±1.0^{b} |
| | High | 60 | 0 | 40 | -2.0±1.0^{b} |
| **MMb^{a}** | Low | 0 | 70 | 30 | 87.0±8.0^{c} |
| | High | 0 | 80 | 20 | 81.0±7.0^{c} |
| | Low | 50 | 0 | 50 | -8.0±9.0^{b} |
| | High | 50 | 0 | 50 | -3.0±0.0^{b} |

| | | | | | |
|---|---|---|---|---|---|
| * Glu-Mal = glutamate-malate. Minimum and maximum obtained colour values are designated as ^{b} and ^{c}, respectively. When citrate is present (high) it is 25 % so total amounts so the other additives should be multiplied by 0.75. | | | | | |

**Table 20 - Combinations of substrates that yield the maximum (max) or minimum (min) responses with standard deviations for a*, b* and myoglobin states (not normalized). Results are shown as % of each addition of the respective chemicals (total amounts either 0. 05 mol/ kg or 0. 1 mollkg). Predications were based on unadjusted values (Table 12) of the mixture component effect at day 3. High oxygen packaging and low and high citrate level are shown.**

| **Variable** | **Citrate** | **Succinate** | **Pyruvate** | **Glu-Mal*** | **Magnitude of variable** |
|---|---|---|---|---|---|
| **a*** | Low | 0 | 0 | 100 | 13.4±0.2^{c} |
| | High** | 0 | 0 | 100 | 13.2±0.3^{c} |
| | Low | 60 | 40 | 0 | 11.4±0.2^{b} |
| | High | 50 | 50 | 0 | 11.4±0.2^{b} |
| **b*** | Low | 0 | 0 | 100 | 5.0±0.1^{c} |
| | High | 0 | 0 | 100 | 4.8±0.2^{c} |
| | Low | 60 | 20 | 20 | 4.2±0.1^{b} |
| | High | 50 | 50 | 0 | 4.1±0.1^{b} |
| **DMb*** | Low | 80 | 0 | 20 | -5.0±1.0^{c} |
| | High | 70 | 30 | 0 | -6.0±1.0^{c} |
| | Low | 0 | 100 | 0 | -10.0±1.0^{b} |
| | High | 0 | 0 | 100 | -12.0±0.0^{b} |
| **OMb^{a}** | Low | 0 | 0 | 100 | 91.0±2.0^{c} |
| | High | 0 | 0 | 100 | 98.0±2.0^{c} |
| | Low | 60 | 40 | 0 | 77.0±2.0^{b} |
| | High | 60 | 40 | 0 | 81.0±2.0^{b} |
| **MMb^{a}** | Low | 0 | 90 | 10 | 17.0±1.0^{c} |
| | High | 50 | 50 | 0 | 15.0±2.0^{c} |
| | Low | 0 | 0 | 100 | 9.0±2.0^{b} |
| | High | 20 | 0 | 80 | 7.0±2.0^{b} |

| | | | | | |
|---|---|---|---|---|---|
| * Glu-Mal = glutamate-malate. Minimum and maximum obtained colour values are designated as ^{b} and ^{c}, respectively. When citrate is present (high) it is 25 % so total amounts so the other additives should be multiplied by 0.75. | | | | | |

### Results - The effect of the mixture compared to adding only water

Compared to the average changes in b* in Fig. 6A, it was apparent that b* declined more rapidly with the mixture. Low b* was obtained with succinate and glutamate-malate in low oxygen packaging. The lowest b* in Table 15 (2.3±0.1) was lower than the lowest b* in Table 21 (3.1±1.2). Thus there was a valid reason to think that these ingredients in low oxygen packaging reduced the system quickly and provided more DMb. The situation in high oxygen was less pronounced. On day 3 the high oxygen system with water had a* equal to 12.8, while the highest a* value obtained then was 13.3 (Table 20 and 22).

Compared to the average changes in DMb in Fig. 8A, it was apparent that DMb increased more rapidly and attained a higher value when only water was added. However, if we compared with the optimal mixture of succinate and glutamate-malate in low oxygen packaging at day 3, the content of DMb was much higher (Table 19 and 21) than in water.

OMb in the sample added water in high oxygen packaging was lower than the average sample with additives (Figure 8B and Table 21). The highest OMb (with glutamate-malate) at day 3 in Table 20 (1.0±0.0) was higher than the highest OMb in Table 22 (80±6). Thus both in low and high oxygen packaging the desired state was reached and stabilized earlier with additives.

**Table 21 - Control samples showing values for L*, a*, b* and myoglobin states. The ground beef were added only water and varied in oxygen level (low oxygen), age (young and old) and fat type (beef and pork fat). Two samples were made for each combination with 3 measurements on each sample, resulting in a total of 8 control samples. Mean and standard deviations are shown (not normalized data for myoglobin percentages)**

| | **Day 1** | **Day 3** | **Day 6** | **Day 8** | **Day 10** | **Day 13** |
|---|---|---|---|---|---|---|
| **L*** | 35.5±0.4 | 35.2±0.4 | 34.4±0.4 | 34.5±0.8 | 34.5±0.5 | 34.3±0.9 |
| **a*** | 12.0±1.3 | 8.6±2.4 | 10.1±1.3 | 10.3±1.2 | 10.3±0.7 | 10.4±0.7 |
| **b*** | 4.6±0.8 | 3.1±1.2 | 2.4±0.3 | 2.4±0.4 | 2.4±0.1 | 2.4±0.2 |
| **DMb** | 25.0±17.0 | 65.0±38.0 | 88.0±19.0 | 67.0±31.0 | 94.0±7.0 | 97.0±6.0 |
| **OMb** | 5.0±3.0 | -1.0±3.0 | -6.0±5.0 | 0.0±6.0 | -2.0±2.0 | -6.0±6.0 |
| **MMb** | 67.0±17.0 | 30.0±7.0 | 10.0±10.0 | 22.0±22.0 | 3.0±1.0 | 4.0±2.0 |

**Table 22 - Control samples showing values for L*, a*, b* and myoglobin states. The ground beef were added only water and varied in oxygen level (high oxygen), age (young and old) and fat type (beef and porkfat). Two samples were made for each combination with 3 measurements on each sample, resulting in a total of 8 control samples. Mean and standard deviations are shown (not normalized data for myoglobin percentages)**

| | **Day 1** | **Day 3** | **Day 6** | **Day 8** |
|---|---|---|---|---|
| **L*** | 36.4±1.1 | 36.5±1.1 | 36.6±1.1 | 35.7±1.6 |
| **a*** | 14.7±1.1 | 12.8±0.9 | 11.3±0.7 | 10.7±0.9 |
| **b*** | 5.9±0.2 | 5.5±0.2 | 5.2±0.3 | 5.3±0.2 |
| **DMb** | -17.0±8.0 | -4.0±6.0 | 0.0±12.0 | 6.0±7.0 |
| **OMb** | 102.0±8.0 | 80.0±6.0 | 65.0±12.0 | 50.0±7.0 |
| **MMb** | 10.0±10.0 | 13.0±5.0 | 24.0±15.0 | 30.0±4.0 |

### Discussion and conclusions

Ground beef was packaged in low and high oxygen atmosphere, with the addition of a variety of substrates and concentrations to increase the prevalence of reduced myoglobin.

The results suggest that under low-oxygen conditions, it will be most important to keep DMb at maximum value for this atmosphere. The mixture of succinate and glutamate-malate was the single most important variable affecting DMb and a* values (Table 19). Within the course of the experiment (13 days in low oxygen packaging), DMb formation was stabilized by glutamate/succinate (days > 3 days are not shown). Measurements of myoglobin states show a strong response surface toward DMb when a mixture of succinate and glutamate-malate was used.

Under high-oxygen conditions, the results suggest that it will be most important to keep OMb at maximum value for this atmosphere. Maximum OMb was mediated mainly by glutamate-malate and citrate. It therefore seems that mitochondrial complex I best sustained the prevalence of OMb. Even though the magnitude was 0.0 for DMb, succinate was still important and relevant for DMb in high oxygen, similar to its role in low oxygen packaging. This may suggest that it is acting as a mediator between MMb and OMb. Furthermore, the large effect of succinate (being 70% and 80% of the mixture, with and without citrate) in high oxygen, as compared to low oxygen atmosphere (being 50% of the mixture) indicate that the mitochondrial reduction of myoglobin occurring through complex II was stronger in high than low oxygen packaging (Tables 19 and 20). These results indicate that succinate metabolism was influenced by the concentration of oxygen and the activity could become upregulated in high oxygen environment. The accumulation of MMb therefore exceeds the mitochondrial capacity of reducing myoglobin in this atmosphere and the meat colour turns brown. Glutamate-malate additions slowed down the accumulation of MMb.

Pyruvate provoked MMb formation in both low and high oxygen packaging. Pyruvate is a product of glycolysis and can become converted to acetyl-coenzyme A and crosses the mitochondrial membrane into the TCA cycle provided sufficient coenzyme A (CoA) is available. Ramanthan et al. (Meat Sci. (2010) 86(3):738-741) showed that pyruvate may improve meat colour significantly at pH 5.6 and 7.4. Oxidation of pyruvate was also reported by Messer et al. (Am JPhysiol Cell Physiol (2004) 286(3):C565-572) to contribute little (2.1%) to oxidative phosphorylation. In order for pyruvate to function as an electron source in the TCA cycle it needs to be applied together with malate that condenses to oxaloacetate (it still requires that sufficient CoA is present) to occur. Under anaerobic conditions as in meat, pyruvate seems metabolized outside the mitochondria to lactate via lactate dehydrogenase. In our system, pyruvate may therefore have contributed to decreased pH and hence interfered with the reductive system and thereby indirectly generate MMb. Additionally, pyruvate was tested in our system but did not induce oxygen consumption (results not shown).

In general, the conditions that gave most DMb in the low oxygen system contained mainly mixtures of succinate and glutamate-malate, while conditions promoting OMb and MMb contained pyruvate and glutamate-malate. However, pyruvate no longer promoted OMb formation in high oxygen packaging (at least not after day one). Glutamate-malate was the most important component to regulate OMb and succinate for DMb formation in high oxygen packaging.

The day 3 results in high oxygen suggest increased stability of OMb with citrate present. Moreover, the influence of citrate in maintaining OMb increased dramatically at day 8 in high oxygen packaging relative to the importance of the mixture.

Succinate, glutamate, malate and citrate have been shown to remove residual oxygen and reduce myoglobin in meat. For high oxygen storage of ground meat we found that glutamate-malate preserved OMb the most and that citrate became increasingly important with storage time. In low oxygen atmosphere, glutamate-malate plus succinate quickly induced a pure DMb state, while pyruvate promoted MMb formation.

## Claims

1. A method of packaging a food product comprising uncooked meat, the method comprising contacting said product or the uncooked meat to be used therein with a composition comprising as active components: (i) succinate and glutamate and/or malate; or (ii) glutamate, malate and, optionally, citrate; and packaging said product.

2. The method of claim 1 which further comprises storing the meat for a period of time and wherein said method is effective in increasing the colour stability and/or reducing the onset and/or extent of rancidity of the uncooked meat.

3. The method of claim 1 or claim 2, wherein said packaging is carried out under a modified atmosphere.

4. The method of claim 3, wherein the modified atmosphere is a gaseous low-oxygen atmosphere containing less than about 1 mole% molecular oxygen, or a gaseous high-oxygen atmosphere containing up to about 80% molecular oxygen.

5. The method of any one of claims 1 to 4, wherein the composition either comprises succinate, glutamate and at least one of citrate, isocitrate and aconitate, or
the composition comprises succinate, glutamate, malate and citrate, preferably succinate, glutamate, malate and citrate in a ratio of about 11:4:2:3 by weight.

6. The method of any one of claims 1 to 5, wherein the composition comprises active components selected from succinic acid, glutamic acid, monosodium glutamate, citric acid, trisodium citrate, isocitric acid, trisodium isocitrate, aconitic acid, malic acid, sodium malate, pyruvic acid, sodium pyruvate and calcium pyruvate.

7. The method of any one of claims 1 to 6, wherein the composition comprises from 30-75% succinate by weight of active components.

8. The method of any one of claims 1 to 7, wherein the composition comprises from 10-30% glutamate by weight of active components, and/or wherein the composition comprises from 5-25% malate by weight of active components, and/or wherein the composition comprises from 10-30% citrate by weight of active components.

9. The method of claim 1, wherein the composition comprises as active components (i) succinate and glutamate and/or malate; and said product is packaged in a gaseous low oxygen environment which contains less than 2 mole % molecular oxygen, preferably wherein the composition comprises 25-95% by weight succinate by weight of active components, 15-30% by weight glutamate by weight of active components, and/or 15-30% by weight malate by weight of active components;
or
wherein the composition comprises as active components (ii) glutamate, malate and citrate; and said product is packaged in a gaseous high oxygen environment which contains more than 2 mole % molecular oxygen, preferably wherein the composition comprises from 25-75% glutamate by weight of active components, from 25-75% malate by weight of active components, and up to 30% citrate by weight of active components (e.g. from 10-30% citrate by weight of active components).

10. The method of any one of claims 1 to 9, wherein the composition comprises less than about 10% pyruvate by weight of active components.

11. The method of any one of claims 1 to 10, wherein the meat is contacted with an amount of composition which contains between 7.5 and 20 g of said active components per kg of meat.

12. The method of any one of claims 1 to 11, wherein the composition comprises succinic acid and a salt of succinic acid, e.g. in a ratio of about 4:1.

13. The method of any one of claims 1 to 12, wherein the composition comprises glutamic acid and a salt of glutamic acid, and/or wherein the composition comprises malic acid and a salt of malic acid, and/or wherein the composition comprises citric acid and a salt of citric acid.

14. The method of any one of claims 1 to 13, wherein the composition is a liquid composition having a pH of between 5 and 6, e.g. about 5.8.

15. A composition comprising either succinate and glutamate and/or malate as active components, wherein succinate is present in an amount of from 25-95% by weight of active components,
or
comprising glutamate, malate and, optionally, citrate as active components, wherein malate is present in an amount of from 5-25% by weight of active components, preferably wherein the composition comprises glutamate, malate and citrate as active components.

16. A method or composition as claimed in any one of claims 1 to 15 in which the active components are provided in the form of L-glutamate, D-isocitrate, cis-aconitate or L-malate.

## Patentansprüche

1. Verfahren zum Verpacken eines Lebensmittelproduktes, das ungekochtes Fleisch umfasst, wobei das Verfahren das in-Kontakt-bringen des Produktes oder des zu verwendeten ungekochten Fleisches darin mit einer Zusammensetzung, die als aktive Bestandteile folgendes umfasst: (i) Succinat und Glutamat und/oder Malat; oder (ii) Glutamat, Malat und, optional, Citrat; und die Verpackung dieses Produktes umfasst.

2. Verfahren nach Anspruch 1, das ferner die Lagerung des Fleisches für einen Zeitraum umfasst, und wobei das Verfahren bei der Erhöhung der Farbstabilität und/oder Verringerung des Beginns und/oder des Ausmaßes der Ranzigkeit des ungekochten Fleisches wirksam ist.

3. Verfahren nach Anspruch 1 oder 2, wobei die Verpackung unter einer modifizierten Atmosphäre durchgeführt wird.

4. Verfahren nach Anspruch 3, wobei die modifizierte Atmosphäre eine gasförmige Atmosphäre mit geringem Sauerstoffgehalt ist, die weniger als etwa 1 Mol-% molekularen Sauerstoff enthält, oder eine gasförmige Atmosphäre mit hohem Sauerstoffgehalt, die bis zu 80 % molekularem Sauerstoff enthält, ist.

5. Verfahren nach einem der Ansprüche 1 bis 4, wobei die Zusammensetzung entweder Succinat, Glutamat und wenigstens eines aus Citrat, Isocitrat und Aconitat umfasst,
oder
die Zusammensetzung Succinat, Glutamat, Malat und Citrat umfasst, bevorzugt Succinat, Glutamat, Malat und Citrat in einem Verhältnis von etwa 11:4:2:3 Gew.-*%*

6. Verfahren nach einem der Ansprüche 1 bis 5, wobei die Zusammensetzung aktive Komponenten umfasst, ausgewählt aus Succinylsäure, Glutaminsäure, Mononatriumglutamat, Zitronensäure, Trinatriumcitrat, Isocitronensäure, Trinatriumisocitrat, Aconitsäure, Apfelsäure, Natriummalat, Brenztraubensäure, Natriumpyruvat und Calciumpyruvat.

7. Verfahren nach einem der Ansprüche 1 bis 6, wobei die Zusammensetzung 30 - 75 Gew.-% Succinat im Gewichtsverhältnis zu den aktiven Bestandteilen umfasst.

8. Verfahren nach einem der Ansprüche 1 bis 7, wobei die Zusammensetzung 10 - 30 Gew.-% Glutamat im Gewichtsverhältnis zu den aktiven Bestandteilen umfasst, und/oder wobei die Zusammensetzung 5 - 25 Gew. -% Malat im Gewichtsverhältnis zu den aktiven Bestandteilen umfasst, und/oder wobei die Zusammensetzung 10 - 30 Gew.-% Citrat im Gewichtsverhältnis zu den aktiven Bestandteilen umfasst.

9. Verfahren nach Anspruch 1, wobei die Zusammensetzung als aktive Bestandteile (i) Succinat und Glutamat und/oder Malat umfasst; und das Produkt in einer gasförmigen Umgebung mit geringem Sauerstoffgehalt verpackt wird, die weniger als 2 Mol-% molekularen Sauerstoff enthält, wobei die Zusammensetzung bevorzugt einen Succinatanteil von 25 - 95 Gew. -% Succinat im Gewichtsverhältnis zu den aktiven Bestandteilen, 15 - 30 Gew.-% Glutamat im Gewichtsverhältnis zu den aktiven Bestandteilen, und/oder 15 - 30 Gew. -% Malat im Gewichtsverhältnis zu den aktiven Bestandteilen umfasst;
oder
wobei die Zusammensetzung als aktive Bestandteile (ii) Glutamat, Malat und Citrat umfasst; und das Produkt in einem gasförmigen Umgebung mit hohem Sauerstoffgehalt verpackt wird, die mehr als 2 Mol -% molekularen Sauerstoff enthält, wobei die Zusammensetzung bevorzugt 25 - 75 Gew.-% Glutamat im Gewichtsverhältnis zu den aktiven Bestandteilen umfasst, 25 - 75 % Malat im Gewichtsverhältnis zu den aktiven Bestandteilen, und bis zu 30 Gew. -% Citrat im Gewichtsverhältnis zu den aktiven Bestandteilen (z.B. von 10 - 30 % Citrat im Gewichtsverhältnis zu den aktiven Bestandteilen).

10. Verfahren nach einem der Ansprüche 1 bis 9, wobei die Zusammensetzung weniger als etwa 10 % Pyruvat im Gewichtsverhältnis zu den aktiven Bestandteilen umfasst.

11. Verfahren nach einem der Ansprüche 1 bis 10, wobei das Fleisch mit einer Menge der Zusammensetzung in Kontakt gebracht wird, die zwischen 7,5 und 20 g der aktiven Bestandteile pro kg Fleisch enthält.

12. Verfahren nach einem der Ansprüche 1 bis 11, wobei die Zusammensetzung Succinylsäure und ein Salz von Succinylsäure umfasst, z.B. in einem Verhältnis von etwa 4:1.

13. Verfahren nach einem der Ansprüche 1 bis 12, wobei die Zusammensetzung Glutaminsäure und ein Salz von Glutaminsäure umfasst, und/oder wobei die Zusammensetzung Apfelsäure und ein Salz von Apfelsäure umfasst, und/oder wobei die Zusammensetzung Zitronensäure und ein Salz von Zitronensäure umfasst.

14. Verfahren nach einem der Ansprüche 1 bis 13, wobei die Zusammensetzung eine flüssige Zusammensetzung ist, die einen pH-Wert zwischen 5 und 6 aufweist, zum Beispiel einen pH-Wert von etwa 5,8.

15. Zusammensetzung umfassend entweder Succinat und Glutamat und/oder Malat als aktive Bestandteile, wobei Succinat in einer Menge von 25 - 95 Gew. -% im Gewichtsverhältnis zu den aktiven Bestandteilen vorliegt,
oder
Glutamat, Malat, und optional, Citrat als aktive Bestandteile umfasst, wobei Malat in einer Menge von 5 - 25 Gew.-% aktiver Bestandteile vorliegt, bevorzugt wobei die Zusammensetzung Glutamat, Malat und Citrat als aktive Bestandteile umfasst.

16. Verfahren oder Zusammensetzung nach einem der Ansprüche 1 bis 15, wobei die aktiven Bestandteile in der Form von L-Glutamat, D-Isocitrat, Cisaconitat oder L-Malat zur Verfügung gestellt sind.

## Revendications

1. Procédé d'emballage d'un produit alimentaire comprenant de la viande non cuite, le procédé comprenant la mise en contact dudit produit ou de la viande non cuite à utiliser dans celui-ci avec une composition comprenant comme composants actifs : (i) du succinate et du glutamate et/ou du malate ; ou (ii) du glutamate, du malate et éventuellement du citrate ; et l'emballage dudit produit.

2. Procédé selon la revendication 1, qui comprend en outre le stockage de la viande pendant une durée et ledit procédé étant efficace pour améliorer la stabilité de la couleur et/ou réduire le déclenchement et/ou l'étendue d'un rancissement de la viande non cuite.

3. Procédé selon la revendication 1 ou 2, dans lequel ledit emballage est réalisé sous une atmosphère modifiée.

4. Procédé selon la revendication 3, dans lequel l'atmosphère modifiée est une atmosphère à faible teneur en oxygène gazeux contenant moins d'environ 1 % en mole d'oxygène moléculaire ou une atmosphère à teneur en oxygène gazeux élevée contenant jusqu'à environ 80 % d'oxygène moléculaire.

5. Procédé selon l'une quelconque des revendications 1 à 4, dans lequel la composition comprend l'un ou l'autre composant parmi le succinate, le glutamate et au moins l'un parmi le citrate, l'isocitrate et l'aconitate,
ou
la composition comprend du succinate, du glutamate, du malate et du citrate, de préférence, du succinate, du glutamate, du malate et du citrate en un rapport d'environ 11:4:2:3 en poids.

6. Procédé selon l'une quelconque des revendications 1 à 5, dans lequel la composition comprend des composants actifs choisis parmi l'acide succinique, l'acide glutamique, le glutamate monosodique, l'acide citrique, le citrate trisodique, l'acide isocitrique, l'isocitrate trisodique, l'acide aconitique, l'acide malique, le malate de sodium, l'acide pyruvique, le pyruvate de sodium et le pyruvate de calcium.

7. Procédé selon l'une quelconque des revendications 1 à 6, dans lequel la composition comprend de 30 à 75 % de succinate en poids des composants actifs.

8. Procédé selon l'une quelconque des revendications 1 à 7, dans lequel la composition comprend de 10 à 30 % de glutamate en poids des composants actifs, et/ou dans lequel la composition comprend de 5 à 25 % de malade en poids des composants actifs et/ou dans lequel la composition comprend de 10 à 30 % de citrate en poids des composants actifs.

9. Procédé selon la revendication 1, dans lequel la composition comprend comme composants actifs (i) du succinate et du glutamate et/ou du malate ; et ledit produit est conditionné dans un environnement à faible teneur en oxygène gazeux qui contient moins de 2 % en mole d'oxygène moléculaire, de préférence dans lequel la composition comprend 25 à 95 % en poids de succinate en poids des composants actifs, 15 à 30 % en poids de glutamate en poids des composants actifs, 15 à 30 % en poids de glutamate en poids des composants actifs et/ou 15 à 30 % en poids de malate en poids des composants actifs
ou
dans lequel la composition comprend comme composants actifs (ii) du glutamate, du malate et du citrate ; et ledit produit est conditionné dans un environnement à teneur en oxygène gazeux élevée qui contient plus de 2 % en mole d'oxygène moléculaire, de préférence dans lequel la composition comprend de 25 à 75 % de glutamate en poids des composants actifs, de 25 à 75 % de malate en poids des composants actifs et jusqu'à 30 % de citrate en poids des composants actifs (par exemple, de 10 à 30 % de citrate en poids des composants actifs).

10. Procédé selon l'une quelconque des revendications 1 à 9, dans lequel la composition comprend moins d'environ 10 % de pyruvate en poids des composants actifs.

11. Procédé selon l'une quelconque des revendications 1 à 10, dans lequel la viande est mise en contact avec une quantité de composition qui contient entre 7,5 et 20 g desdits composants actifs par kg de viande.

12. Procédé selon l'une quelconque des revendications 1 à 11, dans lequel la composition comprend de l'acide succinique et un sel d'acide succinique, par exemple en un rapport d'environ 4:1.

13. Procédé selon l'une quelconque des revendications 1 à 12, dans lequel la composition comprend de l'acide glutamique et un sel d'acide glutamique et/ou dans lequel la composition comprend de l'acide malique et un sel d'acide malique et/ou dans lequel la composition comprend de l'acide citrique et un sel d'acide citrique.

14. Procédé selon l'une quelconque des revendications 1 à 13, dans lequel la composition est une composition liquide ayant un pH entre 5 et 6, par exemple d'environ 5,8.

15. Composition comprenant l'un ou l'autre des composants succinate et glutamate et/ou malate comme composants actifs, dans lequel le succinate est présent en une quantité de 25 à 95 % en poids des composants actifs, ou
comprenant du glutamate, du malate et éventuellement du citrate comme composants actifs, dans lequel le malate est présent en une quantité de 5 à 25 % en poids des composants actifs, de préférence, la composition comprenant du glutamate, du malate et du citrate comme composants actifs.

16. Procédé ou composition selon l'une quelconque des revendications 1 à 15 dans lequel/laquelle les composants actifs sont fournis sous la forme de L-glutamate, de D-isocitrate, de cis-aconitate ou de L-malate.
